# EUROPÄISCHE PATENTSCHRIFT

(11) **EP 3 160 878 B1**
(45) Veröffentlichungstag und Bekanntmachung des Hinweises auf die Patenterteilung: **13.12.2023**
(21) Anmeldenummer: 15742291.6
(22) Anmeldetag: 28.07.2015
(51) Int. Cl.: B65G 47/08, B65G 47/31

(54) **VERFAHREN UND VORRICHTUNG ZUM FÖRDERN VON STÜCKIGEN PRODUKTEN**
METHOD AND DEVICE FOR CONVEYING PIECE PRODUCTS
PROCÉDÉ ET DISPOSITIF DE TRANSPORT DE PRODUITS FRAGMENTÉS

(30) Priorität: 31.07.2014 DE 102014215106
(43) Veröffentlichungstag der Anmeldung: 03.05.2017
(73) Patentinhaber: LOESCH Verpackungstechnik GmbH + Co. KG, 96146 Altendorf (DE)
(72) Erfinder: HAMMACHER, Heinz-Peter, 96049 Bamberg (DE); HETZER, Tobias, 91054 Erlangen (DE)
(74) Vertreter: Prüfer & Partner mbB Patentanwälte · Rechtsanwälte
(86) Internationale Anmeldenummer: PCT/EP2015/067287
(87) Internationale Veröffentlichungsnummer: WO 2016/016250

(56) Entgegenhaltungen:
- DE-A1-102011 075 174
- GB-A- 2 045 712
- GB-A- 2 090 804
- JP-A- 2010 168 212
- US-A- 4 815 581
- US-A1- 2005 108 992

## Beschreibung

Die Erfindung betrifft ein Verfahren und eine Vorrichtung zum Fördern von stückigen Produkten auf einer oder mehreren nebeneinander und im Wesentlichen parallel zueinander angeordneten Bahnen derart, dass die Produkte auf jeder der Bahnen aus einem Produktstrom vereinzelt und anschließend gleichmäßig beabstandet und/oder in Gruppen ausgerichtet weiter gefördert werden.

Das erfindungsgemäße Verfahren sowie die erfindungsgemäße Vorrichtung zum Fördern von stückigen Produkten können beispielsweise in Verbindung mit einer Verpackungsmaschine zum Verpacken der stückigen Produkte verwendet werden. Bei den zu fördernden Produkten kann es sich beispielsweise um empfindliche Produkte der Süß- oder Dauerbackwarenindustrie handeln, wie beispielsweise ein- oder mehrschichtige Kekse, Schokoladenprodukte, und dergleichen. Neben Produkten der Lebensmittelindustrie sind aber auch technische Produkte denkbar, wie beispielsweise elektronische oder elektrotechnische Komponenten oder Bauelemente, Maschinenelemente, pharmazeutische oder medizinische Produkte, und dergleichen, die in der Regel in großen Stückzahlen hergestellt, verpackt und vertrieben werden.

Derartige Produkte werden nach ihrer Herstellung üblicherweise mehr oder weniger ungeordnet und unregelmäßig in einem Produktstrom, in dem sich eine Vielzahl identischer Produkte aneinander anliegend stauen, zu einer Verpackungsmaschine oder einer anderen Maschine, mittels der die Produkte weitergefördert und weiterverarbeitet werden, zugeführt. Insbesondere bei Verpackungsmaschinen kann es dabei erforderlich sein, dass die einzelnen Produkte geordnet, vorzugsweise auch unter regelmäßigen, gleichen Abständen zueinander, zu einer Verpackungsstation oder einer anderen Weiterverarbeitungsstation zugeführt werden. Hierbei ist es somit erforderlich, die einzelnen Produkte aus dem zugeführten Produktstrom und Produktstau zu separieren, das heißt die Produkte aus dem Produktstrom zu vereinzeln, und dann vorzugsweise unter konstanten, gleichen Abständen zueinander einzeln weiterzufördern und der nächsten Verarbeitungs- oder Verpackungsstation zuzuführen.

Hierbei kann es auch erwünscht sein, dass die einzelnen Produkte in regelmäßigen Produktgruppen weitergefördert werden. Diese Produktgruppen können sich beispielsweise in Längsrichtung, d.h. in Förderrichtung, erstrecken, so dass die einzelnen Produkte in der Produktgruppe hintereinander angeordnet sind. Alternativ oder zusätzlich können sich diese Produktgruppen auch quer oder schräg zur Förderrichtung, d.h. über mehrere nebeneinander angeordnete Förderbahnen hinweg erstrecken, so dass die Produkte einer bestimmten Produktgruppe im Wesentlichen nebeneinander angeordnet sind. Durch eine Kombination solcher längs und quer verlaufender Gruppen können letztlich auch beliebige Produktmuster in Form einer Produktmatrix oder eines Produktteppichs gebildet werden.

Aus der DE 10 2010 041 346 A1 sind beispielsweise ein Verfahren und eine Vorrichtung zum Befüllen einer mehrreihigen Verpackungsschale mit stückigen Produkten bekannt, insbesondere eine sogenannte Trayloading-Verpackungsmaschine. Bei dieser bekannten Verpackungsmaschine werden die Produkte auf mehreren im Wesentlichen parallel zueinander angeordneten Bahnen gefördert, wobei die einzelnen Ströme der Produkte auf den Bahnen miteinander so synchronisiert werden, dass jeweils ein Produkt von einer Bahn im Wesentlichen gleichzeitig mit jeweils einem Produkt von den anderen Bahnen an eine mehrreihige Verpackungsschale übergeben werden kann. Hierfür werden die Produkte zunächst aus einem zugeführten Produktstrom vereinzelt. Für die gewünschte gleichzeitige Übergabe der Produkte von den nebeneinander angeordneten Bahnen an die Verpackungsschale wird die Geschwindigkeit des Weiterförderns der einzelnen Produkte auf den Bahnen mittels steuer- oder regelbarer Einzelfördereinrichtungen, insbesondere Einzelförderbändern, gesteuert und synchronisiert, die in Förderrichtung des Produktstroms hintereinander angeordnet und so ausgebildet sind, dass sie jeweils nur ein einzelnes Produkt fördern. Auf diese Weise können Produktgruppen gebildet werden, die beispielsweise jeweils aus einer Reihe exakt miteinander ausgerichteter, nebeneinander angeordneter Einzelprodukte bestehen. Am Ende der Förderstrecke wird diese einreihige Produktgruppe an die Verpackungsschale übergeben, wobei die mehreren nebeneinander liegenden Einzelprodukte gleichzeitig in die mehreren nebeneinander angeordneten Fächer der Verpackungsschale übergeben werden. Die nächste einreihige Produktgruppe wird dann unter einem Abstand von der vorhergehenden Produktgruppe zugeführt und an die nächste Reihe der Aufnahmefächer der Verpackungsschale übergeben. Mittels der genannten mehreren, hintereinander geschalteten und nebeneinander angeordneten, geschwindigkeitsgeregelten Einzelfördereinrichtungen (Förderbänder) werden die nebeneinander liegenden Produkte einer Reihe bzw. Gruppe zeit- und positionsgenau an die nachgeordnete Aufnahmeeinrichtung zugeführt (z.B. eine Verpackungsschale zur geordneten Aufnahme der einzelnen Produkte).

Dieses bekannte Fördersystem ist aufgrund der Vielzahl der benötigten Einzelfördereinrichtungen (Einzelförderbänder) jedoch konstruktiv aufwendig und es erfordert einen hohen Aufwand hinsichtlich der Steuerung und Regelung der Förderbänder zur Erzielung der gewünschten Synchronisation. Aufgrund der Vielzahl der benötigten Einzelförderbänder ist mit diesem System auch ein hoher Platzbedarf verbunden. Alle zuvor genannten Faktoren tragen letztlich auch dazu bei, dass dieses bekannte System sehr kostenintensiv ist.

Um einzelne Produkte aus einem kontinuierlichen Produktstrom oder Produktstau zu vereinzeln, sind im Stand der Technik darüber hinaus rad- oder walzenartige Fördereinrichtungen bekannt, an deren Umfang Mitnehmer angebracht sind. Bei einer Rotation dieses Förderrads ergreifen die Mitnehmer jeweils das im Produktstau in Förderrichtung vorderste einzelne Produkt (bzw. gleichzeitig mehrere nebeneinander liegende vorderste Produkte) und vereinzeln dieses Produkt aus dem Stau, indem sie es beschleunigen. Bei derartigen bekannten Rotationsfördereinrichtungen sind die Mitnehmer typischerweise feststehend angebracht und radial zum Zentrum der Drehachse des Förderrads ausgerichtet. Teilweise sind die Mitnehmer dabei federnd so ausgeführt, dass sie leicht nachgeben, wenn sie zur Weiterförderung an dem betreffenden Produkt angreifen. Dadurch soll bewirkt werden, dass die Produkte nicht oder jedenfalls weniger stark beschädigt werden, wenn sie von dem betreffenden Mitnehmer ergriffen werden. Insbesondere bei empfindlichen Produkten der Lebensmittelindustrie, wie Keksen oder anderen Backwaren, stellt eine durch starre Mitnehmer bedingte Beschädigung der Produkte ein großes Problem dar. Aber auch bei gefederten Mitnehmern sind Produktbeschädigungen immer noch häufig zu verzeichnen.

Zur Verringerung oder Vermeidung dieses Problems ist es aus der WO 2013/152798 A1 bekannt, die an den Fördereinrichtungen angebrachten Mitnehmereinrichtungen in Förderrichtung der Produkte gesteuert verschwenkbar zu lagern. Diese Mitnehmer greifen dabei zwischen zwei in dem Produktstrom aufeinanderfolgende Produkte ein und führen diese derart, dass die Produkte gesteuert aus dem Produktstrom vereinzelt und zeit- und ortsgenau ausgerichtet unter gleichmäßigen Abständen voneinander und/oder in Gruppen weitergefördert werden.

Alle vorstehend beschriebenen Mitnehmereinrichtungen können grundsätzlich aber nur verwendet werden, wenn zwischen den aufeinanderfolgenden Produkten ein ausreichender Raum oder eine Lücke vorhanden ist, in den bzw. die die Mitnehmer eingreifen oder eintauchen können. Diese bekannten Mitnehmereinrichtungen eignen sich somit insbesondere für im Wesentlichen runde Produkte (z.B. Kekse), bei denen, auch wenn die Produkte aneinander anstoßend im Stau hintereinander liegen, in den beiden seitlichen Bereichen der Förderbahn Freiräume oder Lücken zwischen den aufeinanderfolgenden Produkten bestehen, in die die Mitnehmer eintauchen können, um das betroffene Produkt an seinem Umfang zu ergreifen. Die oben beschriebenen Mitnehmereinrichtungen eignen sich also weniger oder nicht für unregelmäßig geformte Produkte und insbesondere nicht für (recht-)eckige Produkte, die in einem Produktstau entlang ihrer Seitenränder über einen größeren Bereich aneinander anliegen und daher keine oder kaum seitliche Freiräume oder Lücken für einen Eingriff der Mitnehmer aufweisen.

Um die auf mehreren nebeneinander angeordneten Förderbahnen geförderten einzelnen Produkte reihenweise miteinander auszurichten, ist es im Stand der Technik darüber hinaus bekannt, Ausrichtschienen auf den Förderbändern anzuordnen. Hierbei wird beispielsweise ein Balken in die Förderbahn eingeschwenkt, auf den die geförderten Produkte auftreffen und an dem sie sich ausrichten. Die relativen Abstände der Produktreihen zueinander können im laufenden Betrieb damit allerdings nicht oder nur sehr eingeschränkt beeinflusst werden. Außerdem ist hierbei in der Regel nur eine Ausrichtung vollständiger Produktreihen möglich. Darüber hinaus können Ausrichtschienen in der Regel nur eingesetzt werden, wenn zwischen den zugeführten Produktreihen auf allen Bahnen eine ausreichend große Lücke besteht, in die die Ausrichtschiene jeweils eingeschwenkt werden kann.

Weitere Verfahren und Vorrichtungen zum Fördern von stückigen Produkten sind bekannt aus der GB 2 045 712 A, der US 4 815 581 A, der DE 10 2011 075 174 A1, und der US 2005/108992 A1. Die GB 2 045 712 A offenbart ein Verfahren nach dem Oberbegriff des Anspruchs 1.

Ausgehend von diesen bekannten Vorrichtungen und Verfahren liegt der Erfindung die Aufgabe zugrunde, die oben beschriebenen Nachteile des Standes der Technik zu überwinden und somit ein verbessertes Verfahren sowie eine verbesserte Vorrichtung zu schaffen, durch die stückige Produkte aus einem Produktstrom oder Produktstau vereinzelt und anschließend unter gleichen oder regelmäßigen Abständen zueinander und/oder ggf. in Gruppen von Produkten ausgerichtet weitergefördert werden können. Dieses soll insbesondere auch bei wechselnden Beschickungssituationen möglich sein, beispielsweise wenn die Produkte eingangsseitig in einem unregelmäßigen, lückenhaften oder durchgehenden Produktstrom zugeführt werden. Es sollen somit eine Vorrichtung und ein Verfahren zur Vergleichmäßigung der Produktabstände, zur Bildung von Produktgruppen sowie zum Ausrichten von Produktreihen oder -gruppen geschaffen werden. Sofern die Produkte auf mehreren nebeneinander angeordneten Bahnen gefördert werden, sollen die einzelnen auf den Bahnen nebeneinander liegenden Produkte miteinander so ausgerichtet werden, dass gleichmäßige Produktreihen und ggf. entsprechende Produktgruppen oder Produktmuster gebildet werden. Auf diese Weise soll es ermöglicht werden, die in der Förderstrecke aufeinanderfolgenden einzelnen Produkte bzw. Produktreihen bzw. Produktgruppen gesteuert, zeit- und positionsgenau zu einer nachfolgenden Aufnahme- oder Weiterverarbeitungseinrichtung zuzuführen. Schließlich ist es auch eine Aufgabe der vorliegenden Erfindung, eine Förderung hinsichtlich ihrer Form unregelmäßiger, nicht-runder oder (recht-)eckiger Produkte zu bewerkstelligen. Die Förderung soll dabei insgesamt so erfolgen, dass die Produkte schonend behandelt und insbesondere nicht beschädigt werden.

Diese Aufgabe wird erfindungsgemäß gelöst durch ein Verfahren zum Fördern stückiger Produkte gemäß Patentanspruch 1 oder gemäß Patentanspruch 4 für einen einreihigen Produktstrom, d.h. einen Produktstrom in einer Bahn, sowie durch ein entsprechendes Verfahren gemäß Patentanspruch 8 für die Förderung von Produkten auf mehreren nebeneinander und im Wesentlichen parallel zueinander angeordneten Bahnen. Darüber hinaus wird diese Aufgabe erfindungsgemäß gelöst durch eine Vorrichtung zum Fördern stückiger Produkte auf einer oder mehreren nebeneinander und im Wesentlichen parallel zueinander angeordneten Bahnen gemäß Patentanspruch 9 oder gemäß Patentanspruch 10.

Erfindungsgemäß werden somit ein Verfahren und eine Vorrichtung geschaffen zum Fördern von stückigen Produkten auf einer oder mehreren nebeneinander und im Wesentlichen parallel zueinander angeordneten Bahnen derart, dass die Produkte auf jeder der Bahnen aus einem Produktstrom vereinzelt und anschließend gleichmäßig beabstandet und/oder in Gruppen ausgerichtet weitergefördert werden. Dabei werden die Produkte zunächst auf jeder Bahn als einreihiger kontinuierlicher Produktstrom auf einer ersten Fördereinrichtung mit einer ersten Geschwindigkeit zugeführt. Die Produkte werden dann an eine in Förderrichtung der Produkte hinter der ersten Fördereinrichtung angeordnete zweite Fördereinrichtung übergeben, die die Produkte aufnimmt und mit einer zweiten Geschwindigkeit weiterfördert, die größer ist als die erste Geschwindigkeit, wobei das jeweils vorderste Produkt in dem Produktstrom bei der Übergabe von der ersten Fördereinrichtung an die zweite Fördereinrichtung beschleunigt und dadurch unter Bildung einer Lücke in Förderrichtung von dem Produktstrom abgetrennt wird. Schließlich werden die abgetrennten Produkte in Förderrichtung auf der zweiten Fördereinrichtung mittels mindestens einer Mitnehmereinrichtung zeit- und ortsgenau ausgerichtet, wobei die Mitnehmereinrichtung an dem abgetrennten Produkt angreift und sich mit einer Geschwindigkeit in Förderrichtung vorwärts bewegt, die zu der zweiten Geschwindigkeit in einem Verhältnis derart steht, dass die Mitnehmereinrichtung das abgetrennte Produkt abbremst oder mit der zweiten Geschwindigkeit weiterfördert oder weiter beschleunigt. Das erfindungsgemäße Verfahren und die entsprechende Vorrichtung umfassen des Weiteren folgende Schritte bzw. Merkmale: Aufstauen der Produkte auf der ersten Fördereinrichtung mittels einer ersten Mitnehmereinrichtung, die in Förderrichtung an der Vorderseite des vordersten Produkts in dem Produktstrom angreift; und Freigeben der aufgestauten Produkte durch die erste Mitnehmereinrichtung für die Übergabe der Produkte an die zweite Fördereinrichtung, indem sich die erste Mitnehmereinrichtung mit einer Geschwindigkeit in Förderrichtung vorwärts bewegt, die größer ist als die erste Geschwindigkeit der ersten Fördereinrichtung.

Das erfindungsgemäße Verfahren nach Anspruch 1 und die entsprechende Vorrichtung nach Anspruch 9 umfassen des Weiteren folgende Schritte bzw. Merkmale: Aufstauen der weiteren Produkte in dem Produktstrom auf der ersten Fördereinrichtung mittels einer zweiten Mitnehmereinrichtung, nachdem das jeweils vorhergehende vorderste Produkt des Produktstroms bei der Übergabe an die zweite Fördereinrichtung von dem Produktstrom abgetrennt wurde, wobei die zweite Mitnehmereinrichtung in die zwischen dem vorhergehenden abgetrennten Produkt und dem weiteren Produktstrom gebildete Lücke eingreift und in Förderrichtung an der Vorderseite des nächsten vordersten Produkts in dem Produktstrom angreift, während das jeweils vorhergehende abgetrennte Produkt kontinuierlich auf der zweiten Fördereinrichtung weitergefördert wird; und Freigeben der aufgestauten Produkte durch die zweite Mitnehmereinrichtung für die Übergabe der Produkte an die zweite Fördereinrichtung, indem sich die zweite Mitnehmereinrichtung mit einer Geschwindigkeit in Förderrichtung vorwärts bewegt, die größer ist als die erste Geschwindigkeit der ersten Fördereinrichtung; wobei die ersten und die zweiten Mitnehmereinrichtungen an umlaufenden Antriebsbändern, -riemen oder -ketten angebracht sind, die neben den Fördereinrichtungen angeordnet sind, wobei die ersten und die zweiten Mitnehmereinrichtungen unabhängig voneinander antreibbar und ansteuerbar sind.

Das erfindungsgemäße Verfahren nach Anspruch 4 und die entsprechende Vorrichtung nach Anspruch 10 umfassen des Weiteren folgende Schritte bzw. Merkmale: Aufstauen der weiteren Produkte in dem Produktstrom auf der ersten Fördereinrichtung mittels einer dritten Mitnehmereinrichtung, nachdem das jeweils vorhergehende vorderste Produkt des Produktstroms bei der Übergabe an die zweite Fördereinrichtung von dem Produktstrom abgetrennt wurde, wobei die dritte Mitnehmereinrichtung zusammen mit einer zweiten Mitnehmereinrichtung in die zwischen dem vorhergehenden abgetrennten Produkt und dem weiteren Produktstrom gebildete Lücke eingreift, wobei die dritte Mitnehmereinrichtung in Förderrichtung an der Vorderseite des nächsten vordersten Produkts in dem Produktstrom angreift, während das jeweils vorhergehende abgetrennte Produkt kontinuierlich auf der zweiten Fördereinrichtung weitergefördert wird; wobei sich die zweite Mitnehmereinrichtung im Bereich der zweiten Fördereinrichtung in Förderrichtung mit einer Geschwindigkeit bewegt, die gleich oder größer als die zweite Geschwindigkeit der zweiten Fördereinrichtung ist, so dass die zweite Mitnehmereinrichtung in Förderrichtung an der Rückseite des vorhergehenden, aus dem Produktstrom abgetrennten Produkts angreift und dieses dadurch anschiebt; und Freigeben der aufgestauten Produkte durch die dritte Mitnehmereinrichtung für die Übergabe der Produkte an die zweite Fördereinrichtung, indem sich die dritte Mitnehmereinrichtung mit einer Geschwindigkeit in Förderrichtung vorwärts bewegt, die größer ist als die erste Geschwindigkeit der ersten Fördereinrichtung; wobei die ersten, zweiten und dritten Mitnehmereinrichtungen an umlaufenden Antriebsbändern, -riemen oder -ketten angebracht sind, die neben den Fördereinrichtungen angeordnet sind, wobei die ersten, zweiten und dritten Mitnehmereinrichtungen unabhängig voneinander antreibbar und ansteuerbar sind.

Gemäß des erfindungsgemäßen Verfahrens nach Anspruch 1 und der entsprechenden Vorrichtung nach Anspruch 9 erfolgt das zeit- und ortsgenaue Ausrichten des aus dem Produktstrom abgetrennten Produkts auf der zweiten Fördereinrichtung derart, dass die Produkte bzw. der Produktstrom auf der ersten Fördereinrichtung zunächst mittels einer ersten Mitnehmereinrichtung aufgestaut werden, die in Förderrichtung an der Vorderseite des vordersten Produkts in dem Produktstrom angreift. Die aufgestauten Produkte werden dann durch die erste Mitnehmereinrichtung für die Übergabe an die zweite Fördereinrichtung freigegeben, indem sich die erste Mitnehmereinrichtung von dem Produktstau löst und mit einer Geschwindigkeit in Förderrichtung vorwärts bewegt, die größer ist als die erste Geschwindigkeit der ersten Fördereinrichtung. Im Bereich der zweiten Fördereinrichtung bewegt sich die erste Mitnehmereinrichtung dann in Förderrichtung, gemäß einer bevorzugten Ausführungsform, mit einer Geschwindigkeit, die gleich oder kleiner als die zweite Geschwindigkeit der zweiten Fördereinrichtung ist, so dass die erste Mitnehmereinrichtung in Förderrichtung an der Vorderseite des aus dem Produktstrom abgetrennten Produkts angreift, indem dieses Produkt in Förderrichtung von hinten an die erste Mitnehmereinrichtung heranbewegt wird und an dieser aufläuft, d.h. von dieser gegenüber der zweiten Geschwindigkeit der zweiten Fördereinrichtung abgebremst wird. Dieses Einzelprodukt wird dann mit der Bewegungsgeschwindigkeit der ersten Mitnehmereinrichtung in Förderrichtung weiterbewegt.

Nachdem das jeweils vorderste Produkt des Produktstroms bei der Übergabe von der ersten an die zweite Fördereinrichtung aus dem Produktstrom abgetrennt wurde, werden die folgenden, weiteren Produkte in dem Produktstrom auf der ersten Fördereinrichtung erneut aufgestaut, indem eine zweite Mitnehmereinrichtung in die zwischen dem vorhergehenden vordersten, abgetrennten Produkt und dem weiteren Produktstrom gebildete Lücke eingreift und in Förderrichtung an der Vorderseite des nächsten vordersten Produkts in dem Produktstrom angreift. Wie zuvor wird dieses nächste vorderste Produkt in dem aufgestauten Produktstrom anschließend durch die zweite Mitnehmereinrichtung für eine Übergabe an die zweite Fördereinrichtung freigegeben, indem sich die zweite Mitnehmereinrichtung in Förderrichtung von diesem vordersten Produkt des Produktstroms löst und mit einer Geschwindigkeit in Förderrichtung vorwärts bewegt, die größer ist als die erste Geschwindigkeit der ersten Fördereinrichtung. Aufgrund dieser Freigabe des vordersten aufgestauten Produkts mittels der zweiten Mitnehmereinrichtung wird dieses Produkt wiederum bei der Übergabe an die zweite Fördereinrichtung beschleunigt und dadurch unter erneuter Bildung einer Lücke in Förderrichtung von dem Produktstrom abgetrennt.

Wenn sich die zweite Mitnehmereinrichtung dann (wie zuvor die erste Mitnehmereinrichtung) im Bereich der zweiten Fördereinrichtung in Förderrichtung wiederum mit einer Geschwindigkeit bewegt, die kleiner als die zweite Geschwindigkeit der zweiten Fördereinrichtung ist, läuft das zuletzt aus dem Produktstrom abgetrennte Produkt in Förderrichtung wiederum von hinten an die zweite Mitnehmereinrichtung heran und läuft an dieser auf, so dass die zweite Mitnehmereinrichtung wiederum an der Vorderseite des abgetrennten Einzelprodukts angreift und dieses gegenüber der zweiten Geschwindigkeit der zweiten Fördereinrichtung abbremst.

Dieser zuvor beschriebene Vorgang wird in entsprechender Art und Weise bei jedem weiteren, nachfolgenden Produkt in dem zugeführten Produktstrom wiederholt, d.h. jedes weitere vorderste Produkt aus dem aufgestauten Produktstrom wird bei der Übergabe von der ersten Fördereinrichtung an die zweite Fördereinrichtung beschleunigt und dadurch unter Bildung einer Lücke von dem Produktstrom abgetrennt. Die betreffende Mitnehmereinrichtung, die zum Aufstauen des Produktstroms zunächst an dem jeweiligen vordersten Produkt angegriffen hat, gibt dieses Produkt frei, indem sie sich mit einer Geschwindigkeit in Förderrichtung vorwärts bewegt, die größer ist als die erste Geschwindigkeit der ersten Fördereinrichtung, auf der der Produktstrom zugeführt wird. Im Bereich der zweiten Fördereinrichtung wird die betreffende Mitnehmereinrichtung dann auf eine Geschwindigkeit abgebremst, die gleich oder kleiner als die zweite Geschwindigkeit der zweiten Fördereinrichtung ist, so dass das von dieser Mitnehmereinrichtung zuvor aus dem Produktstrom freigegebene Produkt wiederum an dieser Mitnehmereinrichtung aufläuft und von dieser abgebremst wird, indem diese Mitnehmereinrichtung an der Vorderseite des Produkts angreift.

In einer bevorzugten Ausführungsform des erfindungsgemäßen Verfahrens nach Anspruch 1 und der entsprechenden Vorrichtung nach Anspruch 9 kann vorgesehen sein, dass sich das aus dem Produktstrom abgetrennte Produkt im Bereich der zweiten Fördereinrichtung nicht von hinten an diejenige Mitnehmereinrichtung annähert und an dieser aufläuft, die zuvor den auf der ersten Fördereinrichtung zugeführten Produktstrom aufgestaut hat. In dieser Variante kann vielmehr vorgesehen sein, dass das aus dem Produktstrom abgetrennte Produkt in Förderrichtung von hinten, d.h. an seiner Rückseite, von einer Mitnehmereinrichtung ergriffen wird, die sich im Bereich der zweiten Fördereinrichtung in Förderrichtung mit einer Geschwindigkeit bewegt, die gleich der oder größer als die Geschwindigkeit der zweiten Fördereinrichtung ist, so dass die genannte Mitnehmereinrichtung das betreffende abgetrennte Produkt von hinten anschiebt.

In jeder der zuvor beschriebenen Ausführungsformen der Erfindung wird erreicht, dass die geförderten einzelnen Produkte in der Förderbahn durch die betreffenden Mitnehmereinrichtungen zeit- und positionsbezogen genau ausgerichtet werden, da die Produkte auf der zweiten Fördereinrichtung von der Mitnehmereinrichtung kontrolliert, gesteuert geführt und je nach Bedarf beschleunigt oder abgebremst werden. Durch die Mitnehmerführung werden die Einzelprodukte somit nicht lediglich unkontrolliert von der ersten Fördereinrichtung an die zweite Fördereinrichtung übergeben sondern exakt positioniert und ausgerichtet, damit sie im Anschluss an die zweite Fördereinrichtung zeit- und positionsgenau an die nachfolgende Weiterverarbeitungseinrichtung übergeben werden können.

Diese erfindungsgemäßen Vorteile sind insbesondere bei einer mehrbahnigen Ausführungsform nützlich, bei der Produkte auf mehreren nebeneinander angeordneten Bahnen gefördert und an eine Weiterverarbeitungseinrichtung übergeben werden. Dabei werden die aufeinanderfolgenden Fördereinrichtungen und insbesondere die in den Produktstrom eingreifenden und an den einzelnen Produkten angreifenden Mitnehmereinrichtungen in den nebeneinander verlaufenden Bahnen so gesteuert, dass die einzelnen Produktströme auf den mehreren Bahnen miteinander derart synchronisiert werden, dass jeweils ein Produkt auf einer Bahn nach der Vereinzelung aus dem jeweiligen Produktstrom im Wesentlichen mit den jeweiligen Produkten auf einzelnen ausgewählten oder allen der anderen Bahnen so ausgerichtet ist, dass die Produkte auf den betroffenen Bahnen in einer Richtung senkrecht oder schräg zu der Förderrichtung der Produkte im Wesentlichen in einer Reihe nebeneinander angeordnet sind. Bei der mehrbahnigen Ausführungsform wird somit erreicht, dass die nebeneinander liegenden Produkte auf den Bahnen mit hoher Genauigkeit senkrecht oder schräg zur Förderrichtung miteinander ausgerichtet werden, indem sie durch die Mitnehmereinrichtungen in den einzelnen Bahnen gezielt so beschleunigt oder verzögert werden, dass die in den mehreren Bahnen nebeneinander liegenden Produkte am Ende der Förderstrecke synchron, d.h. zeit- und ortsgenau ausgerichtet, an eine nachfolgende Weiterverarbeitungseinrichtung oder eine Produktaufnahme übergeben werden können.

Mittels der erfindungsgemäßen Vorrichtung und dem erfindungsgemäßen Verfahren kann schließlich insbesondere auch erreicht werden, dass nicht nur (kreis-)runde Produkte sondern auch unregelmäßige oder unförmige oder (recht-)eckige Produkte gefördert und exakt ausgerichtet werden können. Dieses wird dadurch erreicht, dass das jeweils vorderste Produkt eines aufgestauten Produktstroms mittels aufeinander folgender (Band-)Fördereinrichtungen unter Bildung einer Lücke bzw. eines Frei- oder Zwischenraums aus dem Produktstrom abgetrennt wird, wobei die Mitnehmereinrichtungen, die in der Folge für die genaue Ausrichtung der Einzelprodukte sorgen, in diese gebildete Lücke eingreifen und damit die Produkte ergreifen und gesteuert führen können.

Weitere Einzelheiten und Vorteile der Erfindung ergeben sich aus der nachfolgenden detaillierten Beschreibung von Ausführungsbeispielen anhand der beigefügten Zeichnungen.
- Fig. 1: zeigt die erfindungsgemäße Fördervorrichtung schematisch in einer Ansicht von der Seite in einer ersten Position;
- Figs. 2-5: zeigen die erfindungsgemäße Fördervorrichtung aus Fig. 1 in einer Abfolge weiterer Positionen;
- Figs. 6-9: zeigen eine andere Ausführungsform der erfindungsgemäßen Fördervorrichtung in einer entsprechenden Abfolge verschiedener Positionen.

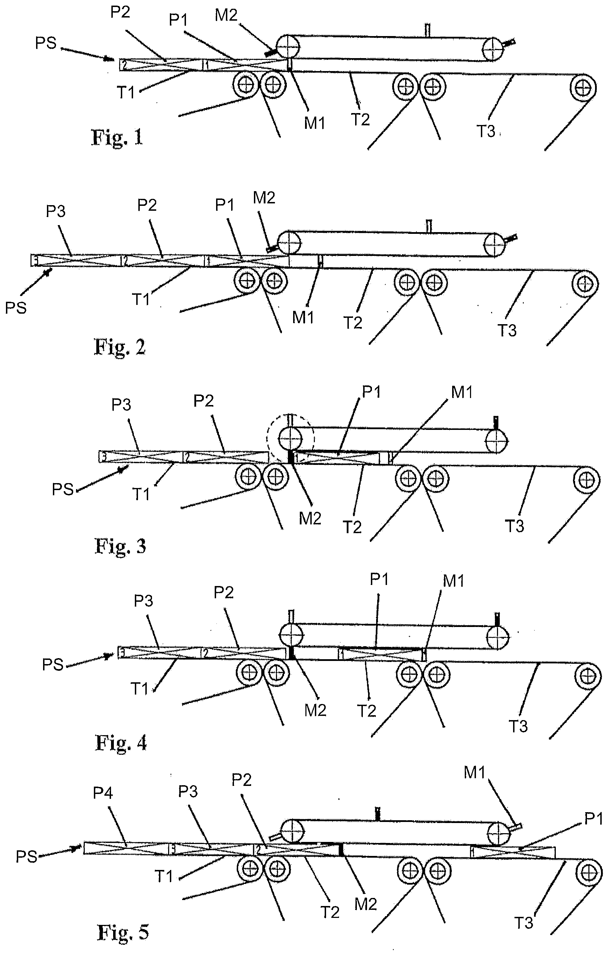

Eine Fördervorrichtung für stückige Produkte P bzw. P1-Pn ist in einer Seitenansicht schematisch in Fig. 1 dargestellt. Hierbei werden die Produkte P als Produktstrom PS auf einer ersten Fördereinrichtung T1 zu der Gesamtvorrichtung zugeführt. In Fig. 1 werden diese Produkte P1-Pn von links kommend auf einer ersten Fördereinrichtung T1, z.B. einem Transportband, zugeführt und nach rechts durch die Vorrichtung hindurchgeführt. Am rechten Ende der Gesamtvorrichtung werden die Produkte P dann an eine Vorrichtung zur Weiterverarbeitung übergeben, beispielsweise zum Verpacken der Produkte.

In Fig. 1 sind eingangsseitig schematisch zwei Produkte P1, P2 dargestellt, die im Stau hintereinander liegen und typischerweise aneinander anstoßen. Im Anschluss an das dargestellte Produkt P1, d.h. in den Figuren von links kommend, folgen dann weitere Produkte P3-Pn in dem Produktstau PS, wie es schematisch auch aus den Figs. 2 bis 9 ersichtlich ist. Bei diesen Produkten P kann es sich beispielsweise um Dauerbackwaren handeln, beispielsweise Kekse. Wie eingangs erläutert wurde, können derartige Produkte beispielsweise eine im Wesentlichen kreisrunde Form haben, wobei in der vorliegenden Vorrichtung aber insbesondere auch nicht-runde, unregelmäßig geformte und/oder eckige Produkte gefördert werden können.

In der erfindungsgemäßen Vorrichtung werden die einzelnen Produkte P1-Pn mittels mehrerer, mindestens aber zweier Fördereinrichtungen, wie beispielsweise Transportbändern T1, T2, T3, sowie mittels mehrerer, mindestens aber zweier Mitnehmereinrichtungen M1, M2, M3 sukzessive aus dem kontinuierlich oder diskontinuierlich zugeführten Produktstau oder Produktstrom PS separiert, ausgerichtet, weitergefördert und einer nachgeschalteten Weiterverarbeitungseinrichtung zugeführt. Wie aus Fig. 1 ersichtlich ist, sind dazu oberhalb von zwei oder mehr Fördereinrichtungen T1, T2, T3 mehrere Mitnehmereinrichtungen M1, M2, M3 angeordnet. Die ersten, zweiten und dritten Fördereinrichtungen T1, T2, T3 können dabei umlaufende Band-, Riemen- oder Kettenfördereinrichtungen sein und sind vorliegend vorzugsweise Transportbänder. Diese Transportbänder laufen mit unterschiedlichen Geschwindigkeiten, wobei typischerweise die Geschwindigkeit v2 des zweiten Transportbands T2 größer ist als die Geschwindigkeit v1 des ersten, eingangsseitigen Transportbands T1. Wie unten im Einzelnen weiter erläutert wird, kann das dritte Transportband T3 wahlweise vorgesehen sein. In diesem Fall ist die Geschwindigkeit v3 des dritten Transportbands T3 typischerweise größer als die Geschwindigkeit v2 des zweiten Transportbands T2.

Die Mitnehmereinrichtungen M1, M2, M3 sind an umlaufenden Antriebsbändern, -riemen oder -ketten angebracht und können entweder starr, feststehend befestigt oder verschwenkbar ausgeführt sein, wobei sie dann beispielsweise über Kurvenbahnen angesteuert werden. Die ersten, zweiten und/oder dritten Mitnehmer M1, M2, M3 können sich dabei unabhängig voneinander bewegen, d.h. sie werden unabhängig voneinander angesteuert und angetrieben. Hierbei wird das sogenannte Racetrack-Prinzip angewendet, so dass in Abhängigkeit von der Anzahl der Antriebsriemen, auf denen sich jeweils die Mitnehmer M1 oder M2 oder M3 befinden, von einem entsprechenden sogenannten mehrzügigen Racetrack gesprochen wird. Sofern also beispielsweise drei nebeneinander angeordnete aber unabhängig voneinander angesteuerte Antriebsriemen für die Mitnehmereinrichtungen vorgesehen sind, wird von einem dreizügigen Racetrack gesprochen. Dabei befindet sich die erste Mitnehmereinrichtung M1 auf einem ersten Antriebsriemen, die zweite Mitnehmereinrichtung M2 auf einem zweiten Antriebsriemen und die dritte Mitnehmereinrichtung M3 auf einem dritten Antriebsriemen. Jeder Antriebsriemen kann dabei jeweils nur einen einzigen oder mehrere Mitnehmer aufweisen. Im Fall mehrerer Mitnehmer sind diese dann unter festen Abständen voneinander auf dem Antriebsriemen angeordnet und somit in ihrer Bewegung voneinander abhängig und miteinander synchron. Jede der vorstehend genannten Varianten oder Kombinationen daraus sind für die erfindungsgemäße Fördervorrichtung denkbar.

Ein Einsatz von mittels einer Kurvenbahn angesteuerten, d.h. typischerweise in Förderrichtung der Produkte verschwenkbar gelagerten Mitnehmern M1, M2, M3 empfiehlt sich für einen verbesserten und sichereren Eingriff, d.h. Einschwenken oder Eintauchen, der einzelnen Mitnehmer M1, M2, M3 in eine Lücke L oder einen Freiraum, die/der bei der Abtrennung eines einzelnen Produkts P aus dem Produktstau PS aufgrund der Beschleunigung des Produkts P entsteht (wie unten im Detail weiter beschrieben wird). Derartige angesteuerte Mitnehmer können auch bei sehr kleinen Lücken L unproblematisch in die jeweilige Lücke L eintauchen, im Wesentlichen ohne dass sie das Produkt P berühren und damit ggf. beschädigen. Diese Ausführungsform ist insbesondere bei hohen bzw. dicken Produkten P vorteilhaft.

In einer weiteren vorteilhaften Ausführungsvariante der Gesamtvorrichtung ist es möglich, dass die Fördereinrichtungen und insbesondere die zweite Fördereinrichtung (Transportband T2) Vakuumeinrichtungen aufweisen, die die geförderten Produkte P ansaugen und so auf dem Transportband festhalten, indem die Reibung zwischen Produkt und Transportband erhöht wird. Bei dieser Ausführungsform kann die Beschleunigung des Produkts P bei einem Geschwindigkeitssprung, d.h. beispielsweise bei einem Übergang von dem ersten Transportband T1 auf das zweite Transportband T2, deutlich erhöht werden. Außerdem kann durch entsprechende Vakuumeinrichtungen an dem zweiten Transportband T2 die Sicherheit der Produktförderung bei der durch den Geschwindigkeitssprung entstehenden Lücke L zwischen dem verbleibenden zugeführten Produktstrom PS und dem daraus abgetrennten Produkt P (wie unten weiter erläutert wird) erhöht werden.

Alle zuvor beschriebenen Komponenten finden sich in entsprechender Art und Weise im Wesentlichen in einer erfindungsgemä-ßen einbahnigen Fördervorrichtung, bei der die Produkte im Wesentlichen als einreihiger bzw. einbahniger Produktstrom PS zugeführt werden und im Wesentlichen in einer linearen Bahn kontinuierlich durch die Fördervorrichtung hindurchgeführt werden. In der Praxis sind zur Erhöhung der Förderleistung in der Regel aber mehrbahnige Fördervorrichtungen vorgesehen, bei denen mehrere Bahnen nebeneinander und im Wesentlichen parallel zueinander angeordnet sind. Auf jeder dieser mehreren Bahnen werden die Produkte im Wesentlichen in gleicher Art und Weise wie vorstehend beschrieben gefördert, und jede dieser mehreren Bahnen enthält im Wesentlichen die gleichen, vorstehend beschriebenen Komponenten wie in der einbahnigen Ausführung.

Bei der mehrbahnigen Ausführungsform können die einzelnen Bahnen unabhängig voneinander arbeiten, d.h. jeweils für sich gesteuert und angetrieben werden. Die mehreren Bahnen können alternativ aber auch gemeinsam oder in Gruppen gesteuert und angetrieben werden. Sofern die einzelnen Produkte auf den nebeneinander angeordneten Bahnen am Ende der Förderstrecke gemeinsam bzw. gleichzeitig und im Wesentlichen in einer Reihe miteinander ausgerichtet an eine nachfolgende Weiterverarbeitungseinrichtung übergeben werden sollen, ist es bei der mehrbahnigen Ausführungsform wesentlich, dass die einzelnen Förderbahnen und insbesondere die in jeder Förderbahn angeordneten ersten, zweiten und dritten Fördereinrichtungen T1, T2, T3 sowie die jeweiligen ersten, zweiten und dritten Mitnehmereinrichtungen M1, M2, M3 so gesteuert werden, dass die einzelnen Produktströme auf den betreffenden Bahnen miteinander derart synchronisiert werden, dass jeweils ein Produkt auf einer Bahn nach der Vereinzelung aus dem jeweiligen Produktstrom im Wesentlichen mit den jeweiligen Produkten auf einzelnen ausgewählten oder allen der anderen Bahnen so ausgerichtet ist, dass die Produkte auf den betroffenen Bahnen für die Übergabe an die nachfolgende Weiterverarbeitungseinrichtung in einer Reihe ausgerichtet und nebeneinander angeordnet sind, wobei eine derartige Reihe je nach Bedarf in einer Richtung senkrecht oder schräg zu der Förderrichtung der Produkte verläuft.

Wie oben unter Bezugnahme auf Fig. 1 schon erwähnt wurde, werden die einzelnen Produkte P1, P2 ... Pn in einem Produktstrom PS in der Zeichnung von links kommend auf dem Transportband T1 in die Gesamtvorrichtung zugeführt. Die Geschwindigkeit v1 des Transportbands T1 kann dabei eine Voreilung gegenüber dem Produktdurchsatz haben, wobei die Geschwindigkeit v1 im Wesentlichen gleich dem Produktdurchsatz (in Stück pro Zeiteinheit) mal der Produktlänge mal der Voreilung sein kann.

Mittels eines ersten Mitnehmers M1, der in die Förderbahn der Produkte P hineinragt, werden die Produkte P in dem Produktstrom PS aufgestaut (siehe Fig. 1). Hierbei steht der erste Mitnehmer M1 im Wesentlichen still oder er bewegt sich in Förderrichtung mit einer Geschwindigkeit vM1, die kleiner ist als die Geschwindigkeit v1 des ersten Transportbands T1. Auf diese Weise laufen die Produkte P in dem Produktstrom PS an dem Mitnehmer M1 auf, wobei der Mitnehmer M1 in Förderrichtung an der Vorderseite des vordersten Produkts P1 in dem Produktstrom PS angreift. Sofern mehrere Produktbahnen nebeneinander angeordnet sind, gilt Entsprechendes für die ersten Mitnehmer M1 in allen Produktbahnen. Hierbei können die jeweiligen ersten Mitnehmer M1 der mehreren Bahnen so miteinander synchronisiert sein, dass die jeweils vordersten Produkte P1 in allen betroffenen Bahnen bereits hier im Wesentlichen senkrecht zur Förderrichtung miteinander ausgerichtet sind und sich auf einer Höhe befinden. Alternativ kann anstelle separater erster Mitnehmer M1 in jeder Bahn vorgesehen sein, dass sich der Mitnehmer M1 beispielsweise in Form eines Querbalkens über alle Bahnen hinweg erstreckt, wodurch sich alle ersten Produkte P1 in den betroffenen Bahnen dann in jedem Fall senkrecht zur Laufrichtung auf einer Höhe befinden. Diese zuletzt genannte Ausführungsform hat den Vorteil, dass eine Steuerung und Synchronisierung der einzelnen Mitnehmer M1 der mehreren Bahnen miteinander nicht erforderlich ist. In jedem Fall können die Mitnehmer M1 in den Förderbahnen bereits an dieser Stelle eine zeit- und ortsbezogene genaue Ausrichtung der einzelnen Produkte in der Förderstrecke bzw. in Förderrichtung bewirken, insbesondere zur Bildung regelmäßiger Abstände zwischen den aufeinanderfolgenden Produkten.

Sobald die Produkte P auf dem ersten Förderband T1 mittels des ersten Mitnehmers M1 korrekt aufgestaut wurden, können die aufgestauten Produkte P durch den ersten Mitnehmer M1 für eine Übergabe an die zweite, nachfolgende Fördereinrichtung (Transportband T2) freigegeben werden. Wie in Fig. 2 erkennbar ist, bewegt sich der Mitnehmer M1 dafür schnell nach rechts, d.h. in Förderrichtung mit einer Geschwindigkeit vM1, die größer ist als die Geschwindigkeit v1 des ersten Transportbands T1.

Die freigegebenen Produkte können sich somit jetzt zunächst mit der Geschwindigkeit v1 des Transportbands T1 weiterbewegen, wobei das jeweils vorderste Produkt (Produkt P1 in Fig. 2) dann über den Bandübergang geschoben wird, d.h. an die nachfolgende zweite Fördereinrichtung (Transportband T2) übergeben wird. Das Transportband T2 bewegt sich mit einer Geschwindigkeit v2, die größer ist als die Geschwindigkeit v1 des ersten Transportbands T1. Sobald sich das vorderste Produkt P1 dann zu einem größeren Teil auf dem Transportband T2 befindet, wird dieses Produkt P1 auf die Geschwindigkeit v2 des zweiten Transportbands T2 beschleunigt. Durch diesen Geschwindigkeitssprung entsteht eine Lücke L bzw. ein Zwischen- oder Freiraum in Förderrichtung zwischen diesem vordersten Produkt P1 und dem in dem Produktstrom PS nachfolgenden nächsten Produkt P2, das sich überwiegend noch auf dem ersten Transportband T1 befindet und sich somit weiterhin nur mit der langsameren Geschwindigkeit v1 des ersten Transportbands T1 bewegt (siehe Fig. 3). Auf diese Weise wurde das bisherige vorderste Produkt P1 des Produktstroms PS aus diesem separiert, so dass nun das nachfolgende Produkt P2 das vorderste Produkt in dem Produktstrom PS ist.

Wie aus den Figs. 3 bis 5 ersichtlich ist, werden die nachfolgenden weiteren Produkte P2-Pn in dem Produktstrom PS auf dem ersten Transportband T1 nunmehr erneut aufgestaut, nachdem das vorhergehende Produkt P1 aus dem Produktstrom PS abgetrennt wurde, wie zuvor beschrieben. Zu diesem Zweck greift ein zweiter Mitnehmer M2 in die Lücke L ein, die zwischen dem vorhergehenden abgetrennten Produkt P1 und dem verbliebenen, weiteren Produktstrom PS entstanden ist. Dabei greift der zweite Mitnehmer M2 wiederum in Förderrichtung an der Vorderseite des nächsten vordersten Produkts P2 in dem Produktstrom PS an, d.h. der Produktstrom PS läuft in Förderrichtung gegen den Mitnehmer M2 auf, nämlich wiederum aufgrund der Förderung durch das erste Förderband T1 mit dessen Geschwindigkeit v1. In entsprechender Weise wie zuvor der Mitnehmer M1 bleibt der Mitnehmer M2 stehen oder bewegt sich mit einer Geschwindigkeit vM2, die kleiner ist als die Geschwindigkeit v1 des ersten Transportbands T1. Der Mitnehmer M2 hält die nachfolgenden Produkte P2-Pn somit wiederum in einem Stau zurück. Entsprechendes gilt für die Mitnehmer M2 in ggf. vorhandenen weiteren, nebeneinander angeordneten Produktförderbahnen, wobei die einzelnen Mitnehmer M2 der einzelnen Bahnen vorzugsweise wiederum so miteinander synchronisiert sind, dass sie die nunmehr jeweils vordersten Produkte P2 der mehreren Bahnen im Wesentlichen in einer Reihe quer über die Bahnen hinweg miteinander ausrichten.

In entsprechender Weise wie es zuvor für den ersten Mitnehmer M1 beschrieben wurde werden die auf dem ersten Transportband T1 durch den zweiten Mitnehmer M2 aufgestauten Produkte P2-Pn dann für eine Übergabe an das zweite Transportband T2 von dem zweiten Mitnehmer M2 freigegeben. Dabei bewegt sich der zweite Mitnehmer M2 wiederum mit einer Geschwindigkeit vM2 in Förderrichtung vorwärts, die größer ist als die Geschwindigkeit v1 des ersten Förderbands T1. Sobald das nunmehr vorderste Produkt P2 dann mit einem größeren Teil in den Bereich des zweiten Förderbands T2 gelangt, wird dieses Produkt P2 aufgrund der höheren Geschwindigkeit v2 des zweiten Transportbands T2 aus dem Produktstau PS separiert und mittels des zweiten Transportbands T2 beschleunigt, wodurch nunmehr eine Lücke L zwischen diesem abgetrennten Produkt P2 und den weiteren, in dem Produktstau PS verbleibenden Produkten P3-Pn gebildet wird.

Wie oben in Verbindung mit den Figs. 1 und 2 erläutert wurde, löst sich der erste Mitnehmer M1 nach dem Aufstauen des Produktstroms PS aus dem Eingriff mit dem vordersten Produkt P1 des Produktstroms PS und bewegt sich schnell nach rechts (in Fig. 2) in den Bereich des zweiten Transportbands T2. Hier wird der Mitnehmer M1 abgebremst und bewegt sich dann mit einer Geschwindigkeit vM1 weiter, die höchstens gleich, vorzugsweise aber kleiner ist als die Geschwindigkeit v2 des zweiten Transportbands T2. Dadurch läuft das zuvor aus dem Produktstau PS abgetrennte erste Produkt P1 aufgrund der Förderung auf dem zweiten Transportband T2 von hinten auf den ersten Mitnehmer M1 auf, so dass der erste Mitnehmer M1 in Förderrichtung an der Vorderseite des abgetrennten Produkts P1 angreift (vgl. Fig. 4). Der Mitnehmer M1 hält das Produkt P1 somit zurück und richtet es zeit- und ortsbezogen so aus, wie es für die Weiterförderung und/oder Übergabe an eine nachgeschaltete Weiterverarbeitungseinrichtung erforderlich ist.

Im Anschluss an das zweite Transportband T2 kann wahlweise ein drittes Transportband T3 vorgesehen sein, an das die Produkte P von dem zweiten Transportband T2 übergeben werden. Das Transportband T3 läuft typischerweise mit einer Geschwindigkeit v3, die gleich oder größer als die Geschwindigkeit v2 des zweiten Transportbands T2 ist. Die Geschwindigkeit v3 des dritten Transportbands T3 sorgt dafür, dass die Produkte P abhängig vom Durchsatz bestimmte Abstände in Förderrichtung aufweisen. Die Geschwindigkeit v3 des dritten Transportbands T3 ist dabei typischerweise gleich dem Produktdurchsatz (in Stück pro Zeiteinheit) mal dem Produktmittenabstand in Förderrichtung.

Das aus dem Produktstau PS abgetrennte vorderste Produkt P1, das im Bereich des zweiten Transportbands T2 oder, sofern vorhanden, im Bereich des dritten Transportbands T3 von dem Mitnehmer M1 zunächst zurückgehalten und dadurch korrekt ausgerichtet wird, wie es oben im Einzelnen beschrieben wurde, wird dann im Bereich des zweiten Transportbands T2 oder vor dessen Ende oder, sofern vorhanden, im Bereich des dritten Transportbands T3 oder vor dessen Ende aus dem Eingriff mit dem Mitnehmer M1 freigegeben, indem der Mitnehmer M1 sich in Förderrichtung mit einer Geschwindigkeit vM1 vorwärts und damit von dem Produkt P1 weg bewegt, die größer ist als die Geschwindigkeit v2 des zweiten Transportbands T2 bzw. die Geschwindigkeit v3 des dritten Transportbands T3. Diese Freigabe des Produkts P1 kann alternativ oder zusätzlich auch dadurch erfolgen, dass sich der erste Mitnehmer M1 einfach aus der Förderstrecke, d.h. aus dem Eingriff mit dem Produkt P1, herausbewegt. Dieses ist eine typische Bewegung eines an einem umlaufenden Antriebsriemen angebrachten Mitnehmers, wodurch der Mitnehmer aus der Förderstrecke herausgeschwenkt und an dem Antriebsriemen auf der der Förderstrecke gegenüberliegenden Seite wieder zurück, d.h. an den Anfang der Förderstrecke bewegt wird (wie es in Fig. 5 erkennbar ist). Am Anfang der Förderstrecke kann der betroffene Mitnehmer dann wieder in die Förderstrecke einschwenken und in entsprechender Weise wie zuvor zunächst wieder einen Produktstau bewirken und dann ein nächstes aus dem Produktstau PS abgetrenntes Produkt P ergreifen und zurückhalten und damit ausrichten.

In der mehrbahnigen Ausführungsform der Fördervorrichtung werden die auf den nebeneinander angeordneten Bahnen geförderten, in einer Reihe nebeneinander liegenden Produkte P1 durch eine Freigabe aus dem Eingriff mit dem jeweiligen Mitnehmer M1 auf jeder der Bahnen vorzugsweise gleichzeitig freigegeben, um beispielsweise gleichzeitig und geordnet als querverlaufende Produktreihe an eine nachgeschaltete Weiterverarbeitungseinrichtung übergeben werden zu können. Auf diese Weise kann ein Produktmuster oder eine Produktmatrix oder ein Produktteppich mit bedarfsgerecht und korrekt angeordneten und ausgerichteten Bahnen und Reihen erzeugt werden.

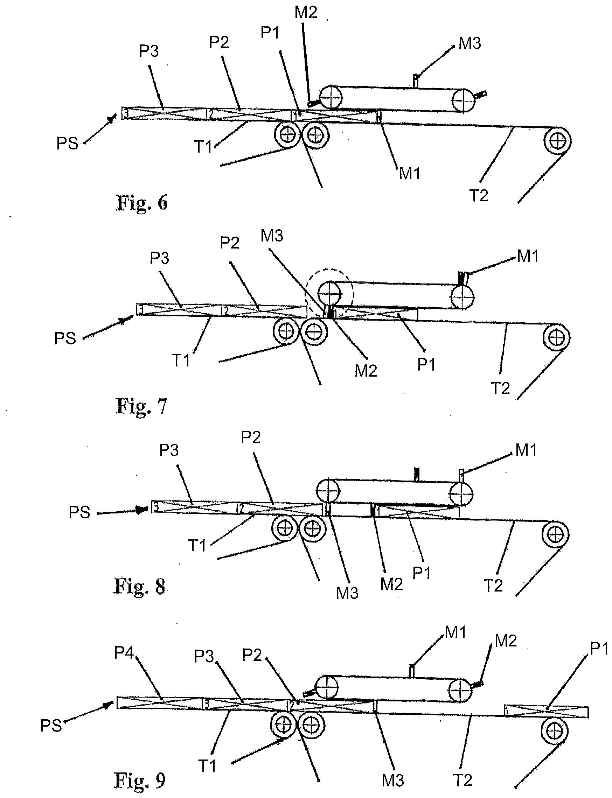

In einer alternativen Ausführungsform der erfindungsgemäßen Fördervorrichtung, die in den Figs. 6 bis 9 dargestellt ist, kann vorgesehen sein, dass das aus dem Produktstau abgetrennte einzelne Produkt nicht durch den vorlaufenden ersten Mitnehmer M1 ausgerichtet wird, an den das Produkt P1 von hinten aufläuft. In dieser alternativen Ausführungsform kann vielmehr vorgesehen sein, dass das abgetrennte Produkt P1 (vgl. Figs. 6 und 7) von einem nachlaufenden Mitnehmer M2 ausgerichtet wird, der in Förderrichtung von hinten gegen das Produkt P1 anläuft und dieses dadurch anschiebt. Konkret kann dabei vorgesehen sein, dass sich der zweite Mitnehmer M2 im Bereich des zweiten Transportbands T2 in Förderrichtung mit einer Geschwindigkeit vM2 bewegt, die mindestens gleich, vorzugsweise aber größer ist als die Geschwindigkeit v2 des zweiten Transportbands T2. Auf diese Weise greift der zweite Mitnehmer M2 in Förderrichtung an der Rückseite des vorauslaufenden, vorher aus dem Produktstrom PS abgetrennten Produkts P1 an und schiebt dieses dadurch an.

Das erfindungsgemäße Verfahren nach Anspruch 4 und die entsprechende Vorrichtung nach Anspruch 10 sieht vor, dass gleichzeitig oder kurz nacheinander zwei Mitnehmer, nämlich ein zweiter Mitnehmer M2 und ein dritter Mitnehmer M3, in die Lücke L einschwenken, die durch die Separierung des vordersten Produkts P1 aus dem Produktstrom PS entstanden ist (vgl. Fig. 7). Der dritte Mitnehmer M3 staut die weiteren Produkte P2-Pn in dem Produktstrom PS auf dem ersten Transportband T1 auf, nachdem das jeweils vorhergehende vorderste Produkt P1 des Produktstroms PS, wie oben beschrieben, von dem Produktstrom PS abgetrennt wurde. Dabei greift der dritte Mitnehmer M3 in Förderrichtung an der Vorderseite des nächsten vordersten Produkts P2 in dem Produktstrom PS an (vgl. Fig. 8).

Wie zuvor beschrieben, bewegt sich der zweite Mitnehmer M2 währenddessen im Bereich des zweiten Transportbands T2 in Förderrichtung mit einer Geschwindigkeit vM2, die mindestens gleich und vorzugsweise größer als die Geschwindigkeit v2 des zweiten Transportbands T2 ist. Dadurch greift der zweite Mitnehmer M2 in Förderrichtung an der Rückseite des vorhergehenden separierten Produkts P1 an und schiebt dieses somit von hinten an, wodurch er es wiederum korrekt ausrichtet (vgl. Fig. 8).

Wie Fig. 9 zeigt, wird das separierte Produkt P1 schließlich im Bereich oder am Ende des zweiten Transportbands T2 aus dem Eingriff mit dem zweiten Mitnehmer M2 freigegeben, indem dieser sich mit einer Geschwindigkeit vM2 in Förderrichtung weiterbewegt, die kleiner ist als die Geschwindigkeit v2 des zweiten Transportbands T2. Alternativ oder zusätzlich kann die Freigabe des Produkts P1 wiederum dadurch erfolgen, dass sich der zweite Mitnehmer M2 aus der Förderbahn des zweiten Transportbands T2 herausbewegt, beispielsweise indem der Mitnehmer M2 mittels des Antriebsriemens aus der Förderstrecke herausgeschwenkt wird und an dem Antriebsriemen wieder zurück an den Anfang der Förderstrecke läuft.

Die von dem dritten Mitnehmer M3 aufgestauten weiteren Produkte P2-Pn in dem nachfolgenden Produktstrom PS werden schließlich sukzessive und einzeln für eine Übergabe an das zweite Transportband T2 von dem dritten Mitnehmer M3 freigegeben, im Wesentlichen in entsprechender Art und Weise, wie es oben für den ersten Mitnehmer M1 und den zweiten Mitnehmer M2 beschrieben wurde. Für diese Produktfreigabe löst sich der dritte Mitnehmer M3 aus dem Eingriff mit dem nunmehr vordersten Produkt P2 des aufgestauten Produktstroms PS, indem er sich mit einer Geschwindigkeit vM3 in Förderrichtung vorwärts bewegt, die größer ist als die Geschwindigkeit v1 des ersten Transportbands T1. Das betreffende vorderste Produkt P2 des Produktstaus PS wird somit wiederum an das zweite Transportband T2 übergeben und beschleunigt, wobei wiederum eine Lücke zwischen diesem abgetrennten Produkt P2 und dem im Produktstau nachfolgenden nächsten vordersten Produkt P3 gebildet wird. In diese gebildete Lücke kann dann in der weiteren Abfolge ein nächster Mitnehmer in entsprechender Weise eingreifen, wie es oben beschrieben wurde.

Bei dieser zuvor beschriebenen alternativen Ausführungsform können je nach Bedarf und je nach geometrischer Ausführung wahlweise beispielsweise der erste Mitnehmer M1 und der dritte Mitnehmer M3 auf dem gleichen Antriebsriemen angebracht sein. Mit diesem Antriebsriemen bewegen sich der erste Mitnehmer M1 und der dritte Mitnehmer M3 somit gleichzeitig und unter einem festen Abstand zueinander. Wenn der erste Mitnehmer M1 dann beispielsweise das Produkt freigibt und sich dementsprechend vorwärts bewegt, kann sich der dritte Mitnehmer M3 gleichzeitig mitbewegen. Sobald eine ausreichende Lücke zwischen dem abgetrennten Produkt und dem nachfolgenden Produktstrom entstanden ist, kann dann der dritte Mitnehmer M3 im Wesentlichen gleichzeitig oder gemeinsam mit dem zweiten Mitnehmer M2 zwischen die Produkte in diese Lücke eintauchen.

Neben den eingangs beschriebenen Vorteilen, die durch die erfindungsgemäße Fördereinrichtung erzielt werden, kann durch die erfindungsgemäße Freigabe der Produkte beispielsweise auch die Genauigkeit der Positionierung der Produkte erhöht werden, wenn die Produktgeschwindigkeit und die Transportbandgeschwindigkeit bei der Abgabe der Produkte im Wesentlichen oder annähernd gleich sind. Darüber hinaus können durch eine geeignete Steuerung der Freigabebewegung nahezu beliebige Abstände zwischen den sukzessive nacheinander abgegebenen Produkten bzw. Produktreihen (bei einer mehrbahnigen Ausführung) generiert werden.

## Patentansprüche

1. Verfahren zum Fördern von stückigen Produkten (P; P1 bis Pn) derart, dass die Produkte (P; P1 bis Pn) aus einem Produktstrom (PS) vereinzelt und anschließend gleichmäßig beabstandet und/oder in Gruppen ausgerichtet weiter gefördert werden, wobei das Verfahren folgende Schritte umfasst:
a) Zuführen der Produkte (P; P1 bis Pn) als einreihiger kontinuierlicher Produktstrom (PS) auf einer ersten Fördereinrichtung (T1) mit einer ersten Geschwindigkeit (v1);
b) Übergeben der Produkte (P; P1 bis Pn) an eine zweite Fördereinrichtung (T2), die in Förderrichtung der Produkte (P; P1 bis Pn) hinter der ersten Fördereinrichtung (T1) angeordnet ist und auf der die Produkte (P; P1 bis Pn) mit einer zweiten Geschwindigkeit (v2) gefördert werden, die größer ist als die erste Geschwindigkeit (v1), wobei das jeweils vorderste Produkt (P1) in dem Produktstrom (PS) bei der Übergabe an die zweite Fördereinrichtung (T2) beschleunigt und dadurch unter Bildung einer Lücke (L) in Förderrichtung von dem Produktstrom (PS) abgetrennt wird;
c) zeit- und ortsgenaues Ausrichten des abgetrennten Produkts (P1) in Förderrichtung auf der zweiten Fördereinrichtung (T2) mittels mindestens einer Mitnehmereinrichtung (M1, M2), die an dem abgetrennten Produkt (P1) angreift und die sich mit einer Geschwindigkeit (vM1, vM2) in Förderrichtung vorwärts bewegt, die zu der zweiten Geschwindigkeit (v2) in einem Verhältnis derart steht, dass die Mitnehmereinrichtung (M1, M2) das abgetrennte Produkt (P1) abbremst oder mit der zweiten Geschwindigkeit (v2) weiterfördert oder weiter beschleunigt;
d) Aufstauen der Produkte (P; P1 bis Pn) auf der ersten Fördereinrichtung (T1) mittels einer ersten Mitnehmereinrichtung (M1), die in Förderrichtung an der Vorderseite des vordersten Produkts (P1) in dem Produktstrom (PS) angreift;
e) Freigeben der aufgestauten Produkte (P; P1 bis Pn) durch die erste Mitnehmereinrichtung (M1) für die Übergabe der Produkte (P; P1 bis Pn) an die zweite Fördereinrichtung (T2), indem sich die erste Mitnehmereinrichtung (M1) mit einer Geschwindigkeit (vM1) in Förderrichtung vorwärts bewegt, die größer ist als die erste Geschwindigkeit (v1) der ersten Fördereinrichtung (T1);
f) Aufstauen der weiteren Produkte (P2 bis Pn) in dem Produktstrom (PS) auf der ersten Fördereinrichtung (T1) mittels einer zweiten Mitnehmereinrichtung (M2), nachdem das jeweils vorhergehende vorderste Produkt (P1) des Produktstroms (PS) bei der Übergabe an die zweite Fördereinrichtung (T2) von dem Produktstrom (PS) abgetrennt wurde, wobei die zweite Mitnehmereinrichtung (M2) in die zwischen dem vorhergehenden abgetrennten Produkt (P1) und dem weiteren Produktstrom (PS) gebildete Lücke (L) eingreift und in Förderrichtung an der Vorderseite des nächsten vordersten Produkts (P2) in dem Produktstrom (PS) angreift, und
g) Freigeben der aufgestauten Produkte (P2 bis Pn) durch die zweite Mitnehmereinrichtung (M2) für die Übergabe der Produkte (P; P2 bis Pn) an die zweite Fördereinrichtung (T2), indem sich die zweite Mitnehmereinrichtung (M2) mit einer Geschwindigkeit (vM2) in Förderrichtung vorwärts bewegt, die größer ist als die erste Geschwindigkeit (v1) der ersten Fördereinrichtung (T1);
**dadurch gekennzeichnet, dass**
die ersten und die zweiten Mitnehmereinrichtungen (M1, M2) an umlaufenden Antriebsbändern, -riemen oder -ketten angebracht sind, die neben den Fördereinrichtungen (T1, T2) angeordnet sind, wobei die ersten und die zweiten Mitnehmereinrichtungen (M1, M2) unabhängig voneinander antreibbar und ansteuerbar sind und dass der Schritt f) erfolgt während das jeweils vorhergehende abgetrennte Produkt (P1) kontinuierlich auf der zweiten Fördereinrichtung (T2) weitergefördert wird.

2. Verfahren nach Anspruch 1, **dadurch gekennzeichnet, dass** sich die erste Mitnehmereinrichtung (M1) im Bereich der zweiten Fördereinrichtung (T2) in Förderrichtung mit einer Geschwindigkeit (vM1) bewegt, die gleich oder kleiner als die zweite Geschwindigkeit (v2) der zweiten Fördereinrichtung (T2) ist, so dass die erste Mitnehmereinrichtung (M1) in Förderrichtung an der Vorderseite des aus dem Produktstrom (PS) abgetrennten Produkts (P1) angreift, indem dieses Produkt (P1) in Förderrichtung an der ersten Mitnehmereinrichtung (M1) aufläuft.

3. Verfahren nach Anspruch 1, **dadurch gekennzeichnet, dass** sich die zweite Mitnehmereinrichtung (M2) im Bereich der zweiten Fördereinrichtung (T2) in Förderrichtung mit einer Geschwindigkeit (vM2) bewegt, die gleich oder größer als die zweite Geschwindigkeit (v2) der zweiten Fördereinrichtung (T2) ist, so dass die zweite Mitnehmereinrichtung (M2) in Förderrichtung an der Rückseite des vorhergehenden, aus dem Produktstrom (PS) abgetrennten Produkts (P1) angreift und dieses dadurch anschiebt.

4. Verfahren zum Fördern von stückigen Produkten (P; P1 bis Pn) derart, dass die Produkte (P; P1 bis Pn) aus einem Produktstrom (PS) vereinzelt und anschließend gleichmäßig beabstandet und/oder in Gruppen ausgerichtet weiter gefördert werden, wobei das Verfahren folgende Schritte umfasst:
a) Zuführen der Produkte (P; P1 bis Pn) als einreihiger kontinuierlicher Produktstrom (PS) auf einer ersten Fördereinrichtung (T1) mit einer ersten Geschwindigkeit (v1);
b) Übergeben der Produkte (P; P1 bis Pn) an eine zweite Fördereinrichtung (T2), die in Förderrichtung der Produkte (P; P1 bis Pn) hinter der ersten Fördereinrichtung (T1) angeordnet ist und auf der die Produkte (P; P1 bis Pn) mit einer zweiten Geschwindigkeit (v2) gefördert werden, die größer ist als die erste Geschwindigkeit (v1), wobei das jeweils vorderste Produkt (P1) in dem Produktstrom (PS) bei der Übergabe an die zweite Fördereinrichtung (T2) beschleunigt und dadurch unter Bildung einer Lücke (L) in Förderrichtung von dem Produktstrom (PS) abgetrennt wird;
c) zeit- und ortsgenaues Ausrichten des abgetrennten Produkts (P1) in Förderrichtung auf der zweiten Fördereinrichtung (T2) mittels mindestens einer Mitnehmereinrichtung (M1, M2), die an dem abgetrennten Produkt (P1) angreift und die sich mit einer Geschwindigkeit (vM1, vM2) in Förderrichtung vorwärts bewegt, die zu der zweiten Geschwindigkeit (v2) in einem Verhältnis derart steht, dass die Mitnehmereinrichtung (M1, M2) das abgetrennte Produkt (P1) abbremst oder mit der zweiten Geschwindigkeit (v2) weiterfördert oder weiter beschleunigt;
d) Aufstauen der Produkte (P; P1 bis Pn) auf der ersten Fördereinrichtung (T1) mittels einer ersten Mitnehmereinrichtung (M1), die in Förderrichtung an der Vorderseite des vordersten Produkts (P1) in dem Produktstrom (PS) angreift;
e) Freigeben der aufgestauten Produkte (P; P1 bis Pn) durch die erste Mitnehmereinrichtung (M1) für die Übergabe der Produkte (P; P1 bis Pn) an die zweite Fördereinrichtung (T2), indem sich die erste Mitnehmereinrichtung (M1) mit einer Geschwindigkeit (vM1) in Förderrichtung vorwärts bewegt, die größer ist als die erste Geschwindigkeit (v1) der ersten Fördereinrichtung (T1);
f) Aufstauen der weiteren Produkte (P2 bis Pn) in dem Produktstrom (PS) auf der ersten Fördereinrichtung (T1) mittels einer dritten Mitnehmereinrichtung (M3), nachdem das jeweils vorhergehende vorderste Produkt (P1) des Produktstroms (PS) bei der Übergabe an die zweite Fördereinrichtung (T2) von dem Produktstrom (PS) abgetrennt wurde, wobei die dritte Mitnehmereinrichtung (M3) zusammen mit einer zweiten Mitnehmereinrichtung (M2) in die zwischen dem vorhergehenden abgetrennten Produkt (P1) und dem weiteren Produktstrom (PS) gebildete Lücke (L) eingreift, wobei die dritte Mitnehmereinrichtung (M3) in Förderrichtung an der Vorderseite des nächsten vordersten Produkts (P2) in dem Produktstrom (PS) angreift, während das jeweils vorhergehende abgetrennte Produkt (P1) kontinuierlich auf der zweiten Fördereinrichtung (T2) weitergefördert wird;
g) wobei sich die zweite Mitnehmereinrichtung (M2) im Bereich der zweiten Fördereinrichtung (T2) in Förderrichtung mit einer Geschwindigkeit (vM2) bewegt, die gleich oder größer als die zweite Geschwindigkeit (v2) der zweiten Fördereinrichtung (T2) ist, so dass die zweite Mitnehmereinrichtung (M2) in Förderrichtung an der Rückseite des vorhergehenden, aus dem Produktstrom (PS) abgetrennten Produkts (P1) angreift und dieses dadurch anschiebt; und
h) Freigeben der aufgestauten Produkte (P2 bis Pn) durch die dritte Mitnehmereinrichtung (M3) für die Übergabe der Produkte (P2 bis Pn) an die zweite Fördereinrichtung (T2), indem sich die dritte Mitnehmereinrichtung (M3) mit einer Geschwindigkeit (vM3) in Förderrichtung vorwärts bewegt, die größer ist als die erste Geschwindigkeit (v1) der ersten Fördereinrichtung (T1);
i) wobei die ersten, zweiten und dritten Mitnehmereinrichtungen (M1, M2, M3) an umlaufenden Antriebsbändern, -riemen oder - ketten angebracht sind, die neben den Fördereinrichtungen (T1, T2) angeordnet sind, wobei die ersten, zweiten und dritten Mitnehmereinrichtungen (M1, M2, M3) unabhängig voneinander antreibbar und ansteuerbar sind.

5. Verfahren nach einem der vorhergehenden Ansprüche, **gekennzeichnet durch** folgenden weiteren Schritt:
- Übergeben der Produkte (P; P1 bis Pn) an eine dritte Fördereinrichtung (T3), die in Förderrichtung der Produkte (P; P1 bis Pn) hinter der zweiten Fördereinrichtung (T2) angeordnet ist und auf der die Produkte (P; P1 bis Pn) mit einer dritten Geschwindigkeit (v3) gefördert werden, die gleich oder größer als die zweite Geschwindigkeit (v2) ist.

6. Verfahren nach Anspruch 2, **gekennzeichnet durch** folgenden weiteren Schritt:
- Freigeben des abgetrennten Produkts (P1) aus dem Eingriff mit der ersten Mitnehmereinrichtung (M1) im Bereich der zweiten Fördereinrichtung (T2), indem sich die erste Mitnehmereinrichtung (M1) mit einer Geschwindigkeit (vM1) in Förderrichtung vorwärts bewegt, die größer ist als die zweite Geschwindigkeit (v2) der zweiten Fördereinrichtung (T2), oder indem sich die erste Mitnehmereinrichtung (M1) aus der Förderrichtung der zweiten Fördereinrichtung (T2) heraus bewegt.

7. Verfahren nach Anspruch 3 oder 4, **gekennzeichnet durch** folgenden weiteren Schritt:
- Freigeben des abgetrennten Produkts (P1) aus dem Eingriff mit der zweiten Mitnehmereinrichtung (M2) im Bereich der zweiten Fördereinrichtung (T2), indem sich die zweite Mitnehmereinrichtung (M2) mit einer Geschwindigkeit (vM2) in Förderrichtung vorwärts bewegt, die kleiner ist als die zweite Geschwindigkeit (v2) der zweiten Fördereinrichtung (T2), oder indem sich die zweite Mitnehmereinrichtung (M2) aus der Förderrichtung der zweiten Fördereinrichtung (T2) heraus bewegt.

8. Verfahren zum Fördern von stückigen Produkten (P; P1 bis Pn) auf mehreren nebeneinander und im wesentlichen parallel zueinander angeordneten Bahnen, wobei die Produkte (P; P1 bis Pn) auf jeder der Bahnen aus einem Produktstrom (PS) vereinzelt und anschließend gleichmäßig beabstandet und/oder in Gruppen (PG) ausgerichtet weiter gefördert werden, **gekennzeichnet durch** folgende Schritte:
- Fördern der Produkte (P; P1 bis Pn) in jeder der Bahnen mit einem Verfahren zum Fördern von stückigen Produkten (P; P1 bis Pn) gemäß einem der Ansprüche 1 bis 7; und
- Steuern der ersten und/oder zweiten und/oder dritten Fördereinrichtungen (T1, T2, T3) und/oder der ersten und/oder zweiten und/oder dritten Mitnehmereinrichtungen (M1, M2, M3) in den mehreren Bahnen so, dass die einzelnen Produktströme (PS; P1 bis Pn) auf den mehreren Bahnen miteinander derart synchronisiert werden, dass jeweils ein Produkt (P1 bis Pn) auf einer Bahn nach der Vereinzelung aus dem jeweiligen Produktstrom (PS) im wesentlichen mit den jeweiligen Produkten (P1 bis Pn) auf einzelnen ausgewählten oder allen der anderen Bahnen so ausgerichtet ist, dass die Produkte (P1 bis Pn) auf den betroffenen Bahnen in einer Richtung senkrecht oder schräg zu der Förderrichtung der Produkte (P1 bis Pn) im wesentlichen in einer Reihe nebeneinander angeordnet sind.

9. Vorrichtung zum Fördern von stückigen Produkten (P; P1 bis Pn) auf einer oder mehreren nebeneinander und im wesentlichen parallel zueinander angeordneten Bahnen derart, dass die Produkte (P; P1 bis Pn) aus einem Produktstrom (PS) vereinzelt und anschließend gleichmäßig beabstandet und/oder in Gruppen (PG) ausgerichtet weiter gefördert werden, wobei sie unter Verwendung eines Verfahrens nach Anspruch 1 arbeitet, wobei sie auf jeder der einen oder mehreren nebeneinander angeordneten Bahnen folgende Merkmale aufweist:
a) eine erste Fördereinrichtung (T1) zum Zuführen der Produkte (P; P1 bis Pn) auf jeder Bahn als einreihiger kontinuierlicher Produktstrom (PS) mit einer ersten Geschwindigkeit (v1);
b) eine in Förderrichtung der Produkte (P; P1 bis Pn) hinter der ersten Fördereinrichtung (T1) angeordnete zweite Fördereinrichtung (T2) zum Aufnehmen der Produkte (P; P1 bis Pn) von der ersten Fördereinrichtung (T1) und zum weiteren Fördern der Produkte (P; P1 bis Pn) mit einer zweiten Geschwindigkeit (v2), die größer ist als die erste Geschwindigkeit (v1), wobei das jeweils vorderste Produkt (P1) in dem Produktstrom (PS) bei der Übergabe von der ersten Fördereinrichtung (T1) an die zweite Fördereinrichtung (T2) beschleunigt und dadurch unter Bildung einer Lücke (L) in Förderrichtung von dem Produktstrom (PS) abgetrennt wird;
c) mindestens eine Mitnehmereinrichtung (M1, M2) zum zeit- und ortsgenauen Ausrichten des abgetrennten Produkts (P1) in Förderrichtung auf der zweiten Fördereinrichtung (T2), wobei die Mitnehmereinrichtung (M1, M2) an dem abgetrennten Produkt (P1) angreift und sich mit einer Geschwindigkeit (vM1, vM2) in Förderrichtung vorwärts bewegt, die zu der zweiten Geschwindigkeit (v2) in einem Verhältnis derart steht, dass die Mitnehmereinrichtung (M1, M2) das abgetrennte Produkt (P1) abbremst oder mit der zweiten Geschwindigkeit (v2) weiterfördert oder weiter beschleunigt;
d) eine erste Mitnehmereinrichtung (M1)
d1) zum Aufstauen der Produkte (P; P1 bis Pn) auf der ersten Fördereinrichtung (T1), wobei die erste Mitnehmereinrichtung (M1) in Förderrichtung an der Vorderseite des vordersten Produkts (P1) in dem Produktstrom (PS) angreift, und
d2) zum Freigeben der aufgestauten Produkte (P; P1 bis Pn) für die Übergabe der Produkte (P; P1 bis Pn) an die zweite Fördereinrichtung (T2), indem sich die erste Mitnehmereinrichtung (M1) mit einer Geschwindigkeit (vM1) in Förderrichtung vorwärts bewegt, die größer ist als die erste Geschwindigkeit (v1) der ersten Fördereinrichtung (T1); und
e) eine zweite Mitnehmereinrichtung (M2)
e1) zum Aufstauen der weiteren Produkte (P2 bis Pn) in dem Produktstrom (PS) auf der ersten Fördereinrichtung (T1), nachdem das jeweils vorhergehende vorderste Produkt (P1) des Produktstroms (PS) bei der Übergabe an die zweite Fördereinrichtung (T2) von dem Produktstrom (PS) abgetrennt wurde, wobei die zweite Mitnehmereinrichtung (M2) in die zwischen dem vorhergehenden abgetrennten Produkt (P1) und dem weiteren Produktstrom (PS) gebildete Lücke (L) eingreift und in Förderrichtung an der Vorderseite des nächsten vordersten Produkts (P2) in dem Produktstrom (PS) angreift, während das jeweils vorhergehende abgetrennte Produkt (P1) kontinuierlich auf der zweiten Fördereinrichtung (T2) weitergefördert wird, und
e2) zum Freigeben der aufgestauten weiteren Produkte (P2 bis Pn) für die Übergabe der Produkte (P; P2 bis Pn) an die zweite Fördereinrichtung (T2), indem sich die zweite Mitnehmereinrichtung (M2) mit einer Geschwindigkeit (vM2) in Förderrichtung vorwärts bewegt, die größer ist als die erste Geschwindigkeit (v1) der ersten Fördereinrichtung (T1);
f) wobei die ersten und die zweiten Mitnehmereinrichtungen (M1, M2) an umlaufenden Antriebsbändern, -riemen oder -ketten angebracht sind, die neben den Fördereinrichtungen (T1, T2) angeordnet sind, wobei die ersten und die zweiten Mitnehmereinrichtungen (M1, M2) unabhängig voneinander antreibbar und ansteuerbar sind.

10. Vorrichtung zum Fördern von stückigen Produkten (P; P1 bis Pn) auf einer oder mehreren nebeneinander und im wesentlichen parallel zueinander angeordneten Bahnen derart, dass die Produkte (P; P1 bis Pn) aus einem Produktstrom (PS) vereinzelt und anschließend gleichmäßig beabstandet und/oder in Gruppen (PG) ausgerichtet weiter gefördert werden, wobei sie unter Verwendung eines Verfahrens nach Anspruch 4 arbeitet, wobei sie auf jeder der einen oder mehreren nebeneinander angeordneten Bahnen folgende Merkmale aufweist:
a) eine erste Fördereinrichtung (T1) zum Zuführen der Produkte (P; P1 bis Pn) auf jeder Bahn als einreihiger kontinuierlicher Produktstrom (PS) mit einer ersten Geschwindigkeit (v1);
b) eine in Förderrichtung der Produkte (P; P1 bis Pn) hinter der ersten Fördereinrichtung (T1) angeordnete zweite Fördereinrichtung (T2) zum Aufnehmen der Produkte (P; P1 bis Pn) von der ersten Fördereinrichtung (T1) und zum weiteren Fördern der Produkte (P; P1 bis Pn) mit einer zweiten Geschwindigkeit (v2), die größer ist als die erste Geschwindigkeit (v1), wobei das jeweils vorderste Produkt (P1) in dem Produktstrom (PS) bei der Übergabe von der ersten Fördereinrichtung (T1) an die zweite Fördereinrichtung (T2) beschleunigt und dadurch unter Bildung einer Lücke (L) in Förderrichtung von dem Produktstrom (PS) abgetrennt wird;
c) mindestens eine Mitnehmereinrichtung (M1, M2) zum zeit- und ortsgenauen Ausrichten des abgetrennten Produkts (P1) in Förderrichtung auf der zweiten Fördereinrichtung (T2), wobei die Mitnehmereinrichtung (M1, M2) an dem abgetrennten Produkt (P1) angreift und sich mit einer Geschwindigkeit (vM1, vM2) in Förderrichtung vorwärts bewegt, die zu der zweiten Geschwindigkeit (v2) in einem Verhältnis derart steht, dass die Mitnehmereinrichtung (M1, M2) das abgetrennte Produkt (P1) abbremst oder mit der zweiten Geschwindigkeit (v2) weiterfördert oder weiter beschleunigt;
d) eine erste Mitnehmereinrichtung (M1)
d1) zum Aufstauen der Produkte (P; P1 bis Pn) auf der ersten Fördereinrichtung (T1), wobei die erste Mitnehmereinrichtung (M1) in Förderrichtung an der Vorderseite des vordersten Produkts (P1) in dem Produktstrom (PS) angreift, und
d2) zum Freigeben der aufgestauten Produkte (P; P1 bis Pn) für die Übergabe der Produkte (P; P1 bis Pn) an die zweite Fördereinrichtung (T2), indem sich die erste Mitnehmereinrichtung (M1) mit einer Geschwindigkeit (vM1) in Förderrichtung vorwärts bewegt, die größer ist als die erste Geschwindigkeit (v1) der ersten Fördereinrichtung (T1); und
e) eine dritte Mitnehmereinrichtung (M3)
e1) zum Aufstauen der weiteren Produkte (P2 bis Pn) in dem Produktstrom (PS) auf der ersten Fördereinrichtung (T1), nachdem das jeweils vorhergehende vorderste Produkt (P1) des Produktstroms (PS) bei der Übergabe an die zweite Fördereinrichtung (T2) von dem Produktstrom (PS) abgetrennt wurde, wobei die dritte Mitnehmereinrichtung (M3) zusammen mit einer zweiten Mitnehmereinrichtung (M2) in die zwischen dem vorhergehenden abgetrennten Produkt (P1) und dem weiteren Produktstrom (PS) gebildete Lücke (L) eingreift, und wobei die dritte Mitnehmereinrichtung (M3) in Förderrichtung an der Vorderseite des nächsten vordersten Produkts (P2) in dem Produktstrom (PS) angreift, während das jeweils vorhergehende abgetrennte Produkt (P1) kontinuierlich auf der zweiten Fördereinrichtung (T2) weitergefördert wird,
e2) wobei sich die zweite Mitnehmereinrichtung (M2) im Bereich der zweiten Fördereinrichtung (T2) in Förderrichtung mit einer Geschwindigkeit (vM2) bewegt, die gleich oder größer als die zweite Geschwindigkeit (v2) der zweiten Fördereinrichtung (T2) ist, so dass die zweite Mitnehmereinrichtung (M2) in Förderrichtung an der Rückseite des vorhergehenden, aus dem Produktstrom (PS) abgetrennten Produkts (P1) angreift und dieses dadurch anschiebt, und
e3) zum Freigeben der aufgestauten weiteren Produkte (P2 bis Pn) für die Übergabe der Produkte (P2 bis Pn) an die zweite Fördereinrichtung (T2), indem sich die dritte Mitnehmereinrichtung (M3) mit einer Geschwindigkeit (vM3) in Förderrichtung vorwärts bewegt, die größer ist als die erste Geschwindigkeit (v1) der ersten Fördereinrichtung (T1);
f) wobei die ersten, zweiten und dritten Mitnehmereinrichtungen (M1, M2, M3) an umlaufenden Antriebsbändern, -riemen oder - ketten angebracht sind, die neben den Fördereinrichtungen (T1, T2) angeordnet sind, wobei die ersten, zweiten und dritten Mitnehmereinrichtungen (M1, M2, M3) unabhängig voneinander antreibbar und ansteuerbar sind.

11. Vorrichtung nach Anspruch 9, **dadurch gekennzeichnet, dass** sie wahlweise zusätzlich eine in Förderrichtung der Produkte (P; P1 bis Pn) hinter der zweiten Fördereinrichtung (T2) angeordnete dritte Fördereinrichtung (T3) zum Aufnehmen und weiteren Fördern der Produkte (P; P1 bis Pn) mit einer dritten Geschwindigkeit (v3), die gleich oder größer als die zweite Geschwindigkeit (v2) ist, aufweist, und dass sie wahlweise zusätzlich eine dritte Mitnehmereinrichtung (M3) für einen Eingriff mit den Produkten (P; P1 bis Pn) aufweist.

12. Vorrichtung nach Anspruch 10, **dadurch gekennzeichnet, dass** sie wahlweise zusätzlich eine in Förderrichtung der Produkte (P; P1 bis Pn) hinter der zweiten Fördereinrichtung (T2) angeordnete dritte Fördereinrichtung (T3) zum Aufnehmen und weiteren Fördern der Produkte (P; P1 bis Pn) mit einer dritten Geschwindigkeit (v3), die gleich oder größer als die zweite Geschwindigkeit (v2) ist, aufweist.

13. Vorrichtung nach Anspruch 11 oder 12, **dadurch gekennzeichnet, dass** die ersten, zweiten und dritten Fördereinrichtungen (T1, T2, T3) umlaufende Band-, Riemen- oder Kettenfördereinrichtungen sind.

14. Vorrichtung nach Anspruch 11, **dadurch gekennzeichnet, dass** die wahlweise vorhandenen dritten Mitnehmereinrichtungen (M3) an umlaufenden Antriebsbändern, -riemen oder -ketten angebracht sind, die neben den Fördereinrichtungen (T1, T2, T3) angeordnet sind, wobei die dritten Mitnehmereinrichtungen (M3) unabhängig von den ersten und/oder zweiten Mitnehmereinrichtungen (M1, M2) ansteuerbar und antreibbar sind.

15. Vorrichtung nach einem der Ansprüche 9, 10 oder 14, **dadurch gekennzeichnet, dass** an den Antriebsbändern, -riemen oder -ketten der ersten und/oder zweiten und/oder dritten Mitnehmereinrichtungen (M1, M2, M3) jeweils ein oder mehrere Mitnehmerfinger angebracht sind, die feststehend oder in Förderrichtung der Produkte (P; P1 bis Pn) gesteuert verschwenkbar gelagert sind.

16. Vorrichtung nach einem der Ansprüche 9 bis 15, **dadurch gekennzeichnet, dass** die ersten und/oder zweiten und/oder dritten Fördereinrichtungen (T1, T2, T3) Vakuumeinrichtungen aufweisen, die die Produkte (P; P1 bis Pn) ansaugen und an den Fördereinrichtungen (T1, T2, T3) halten.

## Claims

1. A method for conveying piece products (P; P1 to Pn) in such a manner that the products (P; P1 to Pn) are separated out from a product stream (PS) into singles and then are conveyed further being at uniform spacings and/or aligned in groups, wherein the method comprises the following steps:
a) feeding the products (P; P1 to Pn) as a single-row continuous product stream (PS) on a first conveying device (T1) at a first speed (v1);
b) transferring the products (P; P1 to Pn) to a second conveying device (T2) which is arranged behind the first conveying device (T1) in the conveying direction of the products (P; P1 to Pn) and on which the products (P; P1 to Pn) are conveyed at a second speed (v2) which is faster than the first speed (v1), wherein the respectively frontmost product (P1) in the product stream (PS) is accelerated when being transferred to the second conveying device (T2) and is thereby separated off from the product stream (PS) in the conveying direction by a gap (L) being formed;
c) aligning the separated product (P1) at exactly the precise moment in time and space in the conveying direction on the second conveying device (T2) by means of at least one entrainment device (M1, M2) which engages the separated product (P1) and which moves forward in the conveying direction at a speed (vM1, vM2) which is proportionate to the second speed (v2) in such a manner that the entrainment device (M1, M2) brakes the separated product (P1) or conveys it further at the second speed (v2) or accelerates it further;
d) accumulating the products (P; P1 to Pn) on the first conveying device (T1) by means of a first entrainment device (M1) which, in the conveying direction, engages with the front side of the frontmost product (P1) in the product stream (PS);
e) releasing the accumulated products (P; P1 to Pn) by the first entrainment device (M1) for transferring the products (P; P1 to Pn) to the second conveying device (T2) in that the first entrainment device (M1) moves forward in the conveying direction at a speed (vM1) which is faster than the first speed (v1) of the first conveying device (T1);
f) accumulating the further products (P2 to Pn) in the product stream (PS) on the first conveying device (T1) by means of a second entrainment device (M2) after the respectively preceding frontmost product (P1) of the product stream (PS) has been separated from the product stream (PS) when being transferred to the second conveying device (T2), wherein the second entrainment device (M2) engages in the gap (L) formed between the preceding separated product (P1) and the further product stream (PS) and engages, in the conveying direction, with the front side of the next frontmost product (P2) in the product stream (PS); and
g) releasing the accumulated products (P2 to Pn) by the second entrainment device (M2) for transferring the products (P; P2 to Pn) to the second conveying device (T2) in that the second entrainment device (M2) moves forward in the conveying direction at a speed (vM2) which is faster than the first speed (v1) of the first conveying device (T1);
**characterized in that**
the first and the second entrainment devices (M1, M2) are attached on circulating drive bands, drive belts or drive chains which are arranged next to the conveying devices (T1, T2), wherein the first and the second entrainment devices (M1, M2) are drivable and actuatable independently of one another, and **in that** the step f) takes place while the respectively preceding separated product (P1) is continuously being conveyed further on the second conveying device (T2).

2. The method as claimed in claim 1, **characterized in that** the first entrainment device (M1) moves in the region of the second conveying device (T2) in the conveying direction at a speed (vM1) which is equal to or slower than the second speed (v2) of the second conveying device (T2), so that the first entrainment device (M1) engages, in the conveying direction, with the front side of the product (P1) separated from the product stream (PS) **in that** said product (P1) runs up against the first entrainment device (M1) in the conveying direction.

3. The method as claimed in claim 1, **characterized in that** the second entrainment device (M2) moves in the region of the second conveying device (T2) in the conveying direction at a speed (vM2) which is equal to or faster than the second speed (v2) of the second conveying device (T2), so that the second entrainment device (M2) engages, in the conveying direction, with the rear side of the preceding product (P1) separated from the product stream (PS) and thereby pushes said product.

4. A method for conveying piece products (P; P1 to Pn) in such a manner that the products (P; P1 to Pn) are separated out from a product stream (PS) into singles and then are conveyed further being at uniform spacings and/or aligned in groups, wherein the method comprises the following steps:
a) feeding the products (P; P1 to Pn) as a single-row continuous product stream (PS) on a first conveying device (T1) at a first speed (v1);
b) transferring the products (P; P1 to Pn) to a second conveying device (T2) which is arranged behind the first conveying device (T1) in the conveying direction of the products (P; P1 to Pn) and on which the products (P; P1 to Pn) are conveyed at a second speed (v2) which is faster than the first speed (v1), wherein the respectively frontmost product (P1) in the product stream (PS) is accelerated when being transferred to the second conveying device (T2) and is thereby separated off from the product stream (PS) in the conveying direction by a gap (L) being formed;
c) aligning the separated product (P1) at exactly the precise moment in time and space in the conveying direction on the second conveying device (T2) by means of at least one entrainment device (M1, M2) which engages the separated product (P1) and which moves forward in the conveying direction at a speed (vM1, vM2) which is proportionate to the second speed (v2) in such a manner that the entrainment device (M1, M2) brakes the separated product (P1) or conveys it further at the second speed (v2) or accelerates it further;
d) accumulating the products (P; P1 to Pn) on the first conveying device (T1) by means of a first entrainment device (M1) which, in the conveying direction, engages with the front side of the frontmost product (P1) in the product stream (PS);
e) releasing the accumulated products (P; P1 to Pn) by the first entrainment device (M1) for transferring the products (P; P1 to Pn) to the second conveying device (T2) in that the first entrainment device (M1) moves forward in the conveying direction at a speed (vM1) which is faster than the first speed (v1) of the first conveying device (T1);
f) accumulating the further products (P2 to Pn) in the product stream (PS) on the first conveying device (T1) by means of a third entrainment device (M3) after the respectively preceding frontmost product (P1) of the product stream (PS) has been separated from the product stream (PS) when being transferred to the second conveying device (T2), wherein the third entrainment device (M3), together with a second entrainment device (M2), engages in the gap (L) formed between the preceding separated product (P1) and the further product stream (PS), wherein the third entrainment device (M3) engages, in the conveying direction, with the front side of the next frontmost product (P2) in the product stream (PS), while the respectively preceding separated product (P1) is continuously being conveyed further on the second conveying device (T2);
g) wherein the second entrainment device (M2) moves in the region of the second conveying device (T2) in the conveying direction at a speed (vM2) which is equal to or faster than the second speed (v2) of the second conveying device (T2), so that the second entrainment device (M2) engages, in the conveying direction, with the rear side of the preceding product (P1) separated from the product stream (PS) and thereby pushes said product; and
h) releasing the accumulated products (P2 to Pn) by the third entrainment device (M3) for transferring the products (P2 to Pn) to the second conveying device (T2) in that the third entrainment device (M3) moves forward in the conveying direction at a speed (vM3) which is faster than the first speed (v1) of the first conveying device (T1);
i) wherein the first, second and third entrainment devices (M1, M2, M3) are attached on circulating drive bands, drive belts or drive chains which are arranged next to the conveying devices (T1, T2), wherein the first, second and third entrainment devices (M1, M2, M3) are drivable and actuatable independently of one another.

5. The method as claimed in one of the preceding claims, **characterized by** the following further step:
- transferring the products (P; P1 to Pn) to a third conveying device (T3) which is arranged in the conveying direction of the products (P; P1 to Pn) behind the second conveying device (T2) and on which the products (P; P1 to Pn) are conveyed at a third speed (v3) which is equal to or faster than the second speed (v2).

6. The method as claimed in claim 2, **characterized by** the following further step:
- releasing the separated product (P1) from the engagement with the first entrainment device (M1) in the region of the second conveying device (T2) in that the first entrainment device (M1) moves forward in the conveying direction at a speed (vM1) which is faster than the second speed (v2) of the second conveying device (T2), or in that the first entrainment device (M1) moves out of the conveying direction of the second conveying device (T2).

7. The method as claimed in claim 3 or 4, **characterized by** the following further step:
- releasing the separated product (P1) from the engagement with the second entrainment device (M2) in the region of the second conveying device (T2) in that the second entrainment device (M2) moves forward in the conveying direction at a speed (vM2) which is slower than the second speed (v2) of the second conveying device (T2), or in that the second entrainment device (M2) moves out of the conveying direction of the second conveying device (T2).

8. A method for conveying piece products (P; P1 to Pn) on several tracks which are arranged side by side and substantially parallel to one another, wherein, on each of the tracks, the products (P; P1 to Pn) are separated out from a product stream (PS) into singles and then are conveyed further being at uniform spacings and/or aligned in groups (PG), **characterized by** the following steps:
- conveying the products (P; P1 to Pn) on each of the tracks by way of a method for conveying piece products (P; P1 to Pn) according to one of claims 1 to 7; and
- controlling the first and/or second and/or third conveying devices (T1, T2, T3) and/or the first and/or second and/or third entrainment devices (M1, M2, M3) on the several tracks such that the individual product streams (PS; P1 to Pn) on the several tracks are synchronized with one another in such a manner that in each case one product (P1 to Pn) on one track, after being separated out into singles from the respective product stream (PS), is substantially aligned with the respective products (P1 to Pn) on individual selected or all of the other tracks such that the products (P1 to Pn) are arranged on the relevant tracks substantially in a row side by side in a direction perpendicular to or at an angle with respect to the conveying direction of the products (P1 to Pn).

9. A device for conveying piece products (P; P1 to Pn) on one or several tracks, which are arranged side by side and substantially parallel to one another, in such a manner that the products (P; P1 to Pn) are separated out from a product stream (PS) into singles and then are conveyed further being at uniform spacings and/or aligned in groups (PG), wherein said device operates by using a method as claimed in claim 1, wherein said device comprises the following features on each of the one or several tracks which are arranged side by side:
a) a first conveying device (T1) for feeding the products (P; P1 to Pn) on each track as a single-row continuous product stream (PS) at a first speed (v1);
b) a second conveying device (T2), which is arranged in the conveying direction of the products (P; P1 to Pn) behind the first conveying device (T1), for receiving the products (P; P1 to Pn) from the first conveying device (T1) and for conveying the products (P; P1 to Pn) further at a second speed (v2) which is faster than the first speed (v1), wherein the respectively frontmost product (P1) in the product stream (PS) is accelerated when being transferred from the first conveying device (T1) to the second conveying device (T2) and is thereby separated off from the product stream (PS) in the conveying direction by a gap (L) being formed;
c) at least one entrainment device (M1, M2) for aligning the separated product (P1) at exactly the precise moment in time and space in the conveying direction on the second conveying device (T2), wherein the entrainment device (M1, M2) engages the separated product (P1) and moves forward in the conveying direction at a speed (vM1, vM2) which is proportionate to the second speed (v2) in such a manner that the entrainment device (M1, M2) brakes the separated product (P1) or conveys it further at the second speed (v2) or accelerates it further;
d) a first entrainment device (M1)
d1) for accumulating the products (P; P1 to Pn) on the first conveying device (T1), wherein the first entrainment device (M1) engages, in the conveying direction, with the front side of the frontmost product (P1) in the product stream (PS), and
d2) for releasing the accumulated products (P; P1 to Pn) for transferring the products (P; P1 to Pn) to the second conveying device (T2) in that the first entrainment device (M1) moves forward in the conveying direction at a speed (vM1) which is faster than the first speed (v1) of the first conveying device (T1); and
e) a second entrainment device (M2)
e1) for accumulating the further products (P2 to Pn) in the product stream (PS) on the first conveying device (T1) after the respectively preceding frontmost product (P1) of the product stream (PS) has been separated from the product stream (PS) when being transferred to the second conveying device (T2), wherein the second entrainment device (M2) engages in the gap (L) formed between the preceding separated product (P1) and the further product stream (PS) and engages, in the conveying direction, with the front side of the next frontmost product (P2) in the product stream (PS), while the respectively preceding separated product (P1) is continuously being conveyed further on the second conveying device (T2), and
e2) for releasing the accumulated further products (P2 to Pn) for transferring the products (P; P2 to Pn) to the second conveying device (T2) in that the second entrainment device (M2) moves forward in the conveying direction at a speed (vM2) which is faster than the first speed (v1) of the first conveying device (T1);
f) wherein the first and the second entrainment devices (M1, M2) are attached on circulating drive bands, drive belts or drive chains which are arranged next to the conveying devices (T1, T2), wherein the first and the second entrainment devices (M1, M2) are drivable and actuatable independently of one another.

10. A device for conveying piece products (P; P1 to Pn) on one or several tracks, which are arranged side by side and substantially parallel to one another, in such a manner that the products (P; P1 to Pn) are separated out from a product stream (PS) into singles and then are conveyed further being at uniform spacings and/or aligned in groups (PG), wherein said device operates by using a method as claimed in claim 4, wherein said device comprises the following features on each of the one or several tracks which are arranged side by side:
a) a first conveying device (T1) for feeding the products (P; P1 to Pn) on each track as a single-row continuous product stream (PS) at a first speed (v1);
b) a second conveying device (T2), which is arranged in the conveying direction of the products (P; P1 to Pn) behind the first conveying device (T1), for receiving the products (P; P1 to Pn) from the first conveying device (T1) and for conveying the products (P; P1 to Pn) further at a second speed (v2) which is faster than the first speed (v1), wherein the respectively frontmost product (P1) in the product stream (PS) is accelerated when being transferred from the first conveying device (T1) to the second conveying device (T2) and is thereby separated off from the product stream (PS) in the conveying direction by a gap (L) being formed;
c) at least one entrainment device (M1, M2) for aligning the separated product (P1) at exactly the precise moment in time and space in the conveying direction on the second conveying device (T2), wherein the entrainment device (M1, M2) engages the separated product (P1) and moves forward in the conveying direction at a speed (vM1, vM2) which is proportionate to the second speed (v2) in such a manner that the entrainment device (M1, M2) brakes the separated product (P1) or conveys it further at the second speed (v2) or accelerates it further;
d) a first entrainment device (M1)
d1) for accumulating the products (P; P1 to Pn) on the first conveying device (T1), wherein the first entrainment device (M1) engages, in the conveying direction, with the front side of the frontmost product (P1) in the product stream (PS), and
d2) for releasing the accumulated products (P; P1 to Pn) for transferring the products (P; P1 to Pn) to the second conveying device (T2) in that the first entrainment device (M1) moves forward in the conveying direction at a speed (vM1) which is faster than the first speed (v1) of the first conveying device (T1); and
e) a third entrainment device (M3)
e1) for accumulating the further products (P2 to Pn) in the product stream (PS) on the first conveying device (T1) after the respectively preceding frontmost product (P1) of the product stream (PS) has been separated from the product stream (PS) when being transferred to the second conveying device (T2), wherein the third entrainment device (M3), together with a second entrainment device (M2), engages in the gap (L) formed between the preceding separated product (P1) and the further product stream (PS), and wherein the third entrainment device (M3) engages, in the conveying direction, with the front side of the next frontmost product (P2) in the product stream (PS), while the respectively preceding separated product (P1) is continuously being conveyed further on the second conveying device (T2),
e2) wherein the second entrainment device (M2) moves in the region of the second conveying device (T2) in the conveying direction at a speed (vM2) which is equal to or faster than the second speed (v2) of the second conveying device (T2), so that the second entrainment device (M2) engages, in the conveying direction, with the rear side of the preceding product (P1) separated from the product stream (PS) and thereby pushes said product, and
e3) for releasing the accumulated further products (P2 to Pn) for transferring the products (P2 to Pn) to the second conveying device (T2) in that the third entrainment device (M3) moves forward in the conveying direction at a speed (vM3) which is faster than the first speed (v1) of the first conveying device (T1);
f) wherein the first, second and third entrainment devices (M1, M2, M3) are attached on circulating drive bands, drive belts or drive chains which are arranged next to the conveying devices (T1, T2), wherein the first, second and third entrainment devices (M1, M2, M3) are drivable and actuatable independently of one another.

11. The device as claimed in claim 9, **characterized in that**, as an option, said device additionally comprises a third conveying device (T3), which is arranged in the conveying direction of the products (P; P1 to Pn) behind the second conveying device (T2), for receiving and conveying the products (P; P1 to Pn) further at a third speed (v3) which is equal to or faster than the second speed (v2), and **in that** said device comprises, as an option, additionally a third entrainment device (M3) for an engagement with the products (P; P1 to Pn).

12. The device as claimed in claim 10, **characterized in that**, as an option, said device additionally comprises a third conveying device (T3), which is arranged in the conveying direction of the products (P; P1 to Pn) behind the second conveying device (T2), for receiving and conveying the products (P; P1 to Pn) further at a third speed (v3) which is equal to or faster than the second speed (v2).

13. The device as claimed in claim 11 or 12, **characterized in that** the first, second and third conveying devices (T1, T2, T3) are circulating band conveying devices, belt conveying devices or chain conveying devices.

14. The device as claimed in claim 11, **characterized in that** the third entrainment devices (M3), which are provided as an option, are attached on circulating drive bands, drive belts or drive chains which are arranged next to the conveying devices (T1, T2, T3), wherein the third entrainment devices (M3) are actuatable and drivable independently of the first and/or second entrainment devices (M1, M2).

15. The device as claimed in one of claims 9, 10 or 14, **characterized in that** one or several entrainment fingers, which are mounted in a stationary manner or so as to be pivotable in a controlled manner in the conveying direction of the products (P; P1 to Pn), are attached in each case on the drive bands, drive belts or drive chains of the first and/or second and/or third entrainment devices (M1, M2, M3).

16. The device as claimed in one of claims 9 to 15, **characterized in that** the first and/or second and/or third conveying devices (T1, T2, T3) comprise vacuum devices which suck up the products (P; P1 to Pn) and hold them on the conveying devices (T1, T2, T3).

## Revendications

1. Procédé de transport de produits en morceaux (P ; P1 à Pn) de telle sorte que les produits (P ; P1 à Pn) soient séparés à partir d'un flux de produits (PS) et continuent ensuite d'être transportés de manière uniformément espacée et/ou orientée en groupes, le procédé comprenant les étapes suivantes :
a) amener les produits (P ; P1 à Pn) en tant que flux de produits continu à une seule rangée (PS) sur un premier dispositif de transport (T1) à une première vitesse (v1) ;
b) transférer les produits (P ; P1 à Pn) à un deuxième dispositif de transport (T2) qui est disposé derrière le premier dispositif de transport (T1) dans la direction de transport des produits (P ; P1 à Pn) et sur lequel les produits (P ; P1 à Pn) sont transportés à une deuxième vitesse (v2) qui est supérieure à la première vitesse (v1), le produit (P1) respectivement le plus en avant dans le flux de produits (PS) étant accéléré lors du transfert au deuxième dispositif de transport (T2) et étant ainsi séparé du flux de produits (PS) en formant un espace (L) dans la direction de transport ;
c) orienter le produit séparé (P1) dans la direction de transport sur le deuxième dispositif de transport (T2) avec précision dans le temps et dans l'emplacement au moyen d'au moins un dispositif d'entraînement (M1, M2) qui s'engage sur le produit séparé (P1) et qui se déplace vers l'avant dans la direction de transport à une vitesse (vM1, vM2) qui est dans un rapport avec la deuxième vitesse (v2) de telle sorte que le dispositif d'entraînement (M1, M2) freine le produit séparé (P1) ou continue à le transporter à la deuxième vitesse (v2) ou l'accélère davantage ;
d) accumuler les produits (P ; P1 à Pn) sur le premier dispositif de transport (T1) au moyen d'un premier dispositif d'entraînement (M1) qui s'engage dans la direction de transport sur le côté avant du produit le plus en avant (P1) dans le flux de produits (PS) ;
e) libérer les produits accumulés (P ; P1 à Pn) par le premier dispositif d'entraînement (M1) pour le transfert des produits (P ; P1 à Pn) au deuxième dispositif de transport (T2) en ce que le premier dispositif d'entraînement (M1) se déplace vers l'avant dans la direction de transport à une vitesse (vM1) qui est supérieure à la première vitesse (v1) du premier dispositif de transport (T1) ;
f) accumuler les autres produits (P2 à Pn) dans le flux de produits (PS) sur le premier dispositif de transport (T1) au moyen d'un deuxième dispositif d'entraînement (M2) après que le produit le plus en avant précédent respectif (P1) du flux de produits (PS) a été séparé du flux de produits (PS) lors du transfert au deuxième dispositif de transport (T2), le deuxième dispositif d'entraînement (M2) s'engageant dans l'espace (L) formé entre le produit séparé précédent (P1) et l'autre flux de produits (PS) et s'engageant dans la direction de transport sur le côté avant du produit le plus en avant suivant (P2) dans le flux de produits (PS) ; et
g) libérer les produits accumulés (P2 à Pn) par le deuxième dispositif d'entraînement (M2) pour le transfert des produits (P ; P2 à Pn) au deuxième dispositif de transport (T2) en ce que le deuxième dispositif d'entraînement (M2) se déplace vers l'avant dans la direction de transport à une vitesse (vM2) qui est supérieure à la première vitesse (v1) du premier dispositif de transport (T1) ;
**caractérisé en ce que**
les premier et deuxième dispositifs d'entraînement (M1, M2) sont montés sur des rubans, courroies ou chaînes d'entraînement en circulation qui sont disposées à côté des dispositifs de transport (T1, T2), les premier et deuxième dispositifs d'entraînement (M1, M2) étant entraînables et commandables indépendamment l'un de l'autre, et **en ce que** l'étape f) est effectuée pendant que le produit précédent séparé respectif (P1) est transporté en continu sur le deuxième dispositif de transport (T2) .

2. Procédé selon la revendication 1, **caractérisé en ce que** le premier dispositif d'entraînement (M1) se déplace dans la zone du deuxième dispositif de transport (T2) dans la direction de transport à une vitesse (vM1) qui est égale ou inférieure à la deuxième vitesse (v2) du deuxième dispositif de transport (T2), de sorte que le premier dispositif d'entraînement (M1) s'engage dans la direction de transport sur le côté avant du produit (P1) séparé du flux de produits (PS) **en ce que** ce produit (P1) arrive sur le premier dispositif d'entraînement (M1) dans la direction de transport.

3. Procédé selon la revendication 1, **caractérisé en ce que** le deuxième dispositif d'entraînement (M2) se déplace dans la zone du deuxième dispositif de transport (T2) dans la direction de transport à une vitesse (vM2) qui est égale ou supérieure à la deuxième vitesse (v2) du deuxième dispositif de transport (T2), de sorte que le deuxième dispositif d'entraînement (M2) s'engage dans la direction de transport sur le côté arrière du produit (P1) précédent séparé du flux de produits (PS) et ainsi pousse celui-ci.

4. Procédé de transport de produits en morceaux (P ; P1 à Pn) de telle sorte que les produits (P ; P1 à Pn) soient séparés à partir d'un flux de produits (PS) et continuent ensuite d'être transportés de manière uniformément espacée et/ou orientée en groupes, le procédé comprenant les étapes suivantes :
a) amener les produits (P ; P1 à Pn) en tant que flux de produits continu à une seule rangée (PS) sur un premier dispositif de transport (T1) à une première vitesse (v1) ;
b) transférer les produits (P ; P1 à Pn) à un deuxième dispositif de transport (T2) qui est disposé derrière le premier dispositif de transport (T1) dans la direction de transport des produits (P ; P1 à Pn) et sur lequel les produits (P ; P1 à Pn) sont transportés à une deuxième vitesse (v2) qui est supérieure à la première vitesse (v1), le produit (P1) respectivement le plus en avant dans le flux de produits (PS) étant accéléré lors du transfert au deuxième dispositif de transport (T2) et étant ainsi séparé du flux de produits (PS) en formant un espace (L) dans la direction de transport ;
c) orienter le produit séparé (P1) dans la direction de transport sur le deuxième dispositif de transport (T2) avec précision dans le temps et dans l'emplacement au moyen d'au moins un dispositif d'entraînement (M1, M2) qui s'engage sur le produit séparé (P1) et qui se déplace vers l'avant dans la direction de transport à une vitesse (vM1, vM2) qui est dans un rapport avec la deuxième vitesse (v2) de telle sorte que le dispositif d'entraînement (M1, M2) freine le produit séparé (P1) ou continue à le transporter à la deuxième vitesse (v2) ou l'accélère davantage ;
d) accumuler les produits (P ; P1 à Pn) sur le premier dispositif de transport (T1) au moyen d'un premier dispositif d'entraînement (M1) qui s'engage dans la direction de transport sur le côté avant du produit le plus en avant (P1) dans le flux de produits (PS) ;
e) libérer les produits accumulés (P ; P1 à Pn) par le premier dispositif d'entraînement (M1) pour le transfert des produits (P ; P1 à Pn) au deuxième dispositif de transport (T2) en ce que le premier dispositif d'entraînement (M1) se déplace vers l'avant dans la direction de transport à une vitesse (vM1) qui est supérieure à la première vitesse (v1) du premier dispositif de transport (T1) ;
f) accumuler les autres produits (P2 à Pn) dans le flux de produits (PS) sur le premier dispositif de transport (T1) au moyen d'un troisième dispositif d'entraînement (M3) après que le produit précédent le plus en avant respectif (P1) du flux de produits (PS) a été séparé du flux de produits (PS) lors du transfert au deuxième dispositif de transport (T2), dans lequel le troisième dispositif d'entraînement (M3) s'engage conjointement avec un deuxième dispositif d'entraînement (M2) dans l'espace (L) formé entre le produit séparé précédent (P1) et l'autre flux de produits (PS), le troisième dispositif d'entraînement (M3) s'engageant dans la direction de transport sur le côté avant du produit le plus en avant suivant (P2) dans le flux de produits (PS), tandis que le produit séparé précédent respectif (P1) est transporté en continu sur le deuxième dispositif de transport (T2) ;
g) dans lequel le deuxième dispositif d'entraînement (M2) se déplace dans la zone du deuxième dispositif de transport (T2) dans la direction de transport à une vitesse (vM2) qui est égale ou supérieure à la deuxième vitesse (v2) du deuxième dispositif de transport (T2), de sorte que le deuxième dispositif d'entraînement (M2) s'engage dans la direction de transport sur le côté arrière du produit précédent séparé (P1) du flux de produits (PS) et ainsi pousse celui-ci ; et
h) libérer les produits accumulés (P2 à Pn) par le troisième dispositif d'entraînement (M3) pour le transfert des produits (P2 à Pn) au deuxième dispositif de transport (T2) en ce que le troisième dispositif d'entraînement (M3) se déplace vers l'avant dans la direction de transport à une vitesse (vM3) qui est supérieure à la première vitesse (v1) du premier dispositif de transport (T1) ;
i) dans lequel les premier, deuxième et troisième dispositifs d'entraînement (M1, M2, M3) sont montés sur des rubans, courroies ou chaînes d'entraînement en circulation qui sont disposées à côté des dispositifs de transport (T1, T2), les premier, deuxième et troisième dispositifs d'entraînement (M1, M2, M3) étant entraînables et commandables indépendamment les uns des autres.

5. Procédé selon l'une quelconque des revendications précédentes, **caractérisé par** l'étape supplémentaire suivante :
- transférer les produits (P ; P1 à Pn) à un troisième dispositif de transport (T3) qui est disposé derrière le deuxième dispositif de transport (T2) dans la direction de transport des produits (P ; P1 à Pn) et sur lequel les produits (P ; P1 à Pn) sont transportés à une troisième vitesse (v3) qui est égale ou supérieure à la deuxième vitesse (v2).

6. Procédé selon la revendication 2, **caractérisé par** l'étape supplémentaire suivante :
- libérer le produit séparé (P1) de l'engagement avec le premier dispositif d'entraînement (M1) dans la zone du deuxième dispositif de transport (T2) en ce que le premier dispositif d'entraînement (M1) se déplace vers l'avant dans la direction de transport à une vitesse (vM1) qui est supérieure à la deuxième vitesse (v2) du deuxième dispositif de transport (T2) ou en ce que le premier dispositif d'entraînement (M1) se déplace hors de la direction de transport du deuxième dispositif de transport (T2).

7. Procédé selon la revendication 3 ou 4, **caractérisé par** l'étape supplémentaire suivante :
- libérer le produit séparé (P1) de l'engagement avec le deuxième dispositif d'entraînement (M2) dans la zone du deuxième dispositif de transport (T2) en ce que le deuxième dispositif d'entraînement (M2) se déplace vers l'avant dans la direction de transport à une vitesse (vM2) qui est inférieure à la deuxième vitesse (v2) du deuxième dispositif de transport (T2) ou en ce que le deuxième dispositif d'entraînement (M2) se déplace hors de la direction de transport du deuxième dispositif de transport (T2).

8. Procédé de transport de produits en morceaux (P ; P1 à Pn) sur plusieurs chemins disposés les uns à côté des autres et essentiellement parallèlement les uns aux autres, les produits (P ; P1 à Pn) étant séparés sur chacun des chemins à partir d'un flux de produits (PS) et continuant ensuite d'être transportés de manière uniformément espacée et/ou orientée en groupes (PG), **caractérisé par** les étapes suivantes :
- transporter les produits (P ; P1 à Pn) dans chacun des chemins avec un procédé de transport de produits en morceaux (P ; P1 à Pn) selon l'une quelconque des revendications 1 à 7 ; et
- commander les premiers et/ou deuxièmes et/ou troisièmes dispositifs de transport (T1, T2, T3) et/ou les premiers et/ou deuxièmes et/ou troisièmes dispositifs d'entraînement (M1, M2, M3) dans les plusieurs chemins de telle sorte que les flux de produits individuels (PS ; P1 à Pn) sur les plusieurs chemins soient synchronisés les uns avec les autres de telle sorte qu'à chaque fois un produit (P1 à Pn) sur un chemin après la séparation à partir du flux de produits respectif (PS) soit essentiellement orienté avec les produits respectifs (P1 à Pn) sur des chemins individuels sélectionnés ou sur tous les autres chemins de telle sorte que les produits (P1 à Pn) sur les chemins concernés soient disposés essentiellement les uns à côté des autres en une rangée dans une direction perpendiculaire ou oblique par rapport à la direction de transport des produits (P1 à Pn) .

9. Dispositif de transport de produits en morceaux (P ; P1 à Pn) sur un ou plusieurs chemins disposés les uns à côté des autres et essentiellement parallèlement les uns aux autres de telle sorte que les produits (P ; P1 à Pn) soient séparés à partir d'un flux de produits (PS) et continuent ensuite d'être transportés de manière uniformément espacée et/ou orientée en groupes (PG), dans lequel il fonctionne en utilisant un procédé selon la revendication 1, dans lequel il présente sur chacun des un ou plusieurs chemins disposés les uns à côté des autres les caractéristiques suivantes :
a) un premier dispositif de transport (T1) pour amener les produits (P ; P1 à Pn) sur chaque chemin en tant que flux de produits continu à une seule rangée (PS) à une première vitesse (v1) ;
b) un deuxième dispositif de transport (T2) disposé derrière le premier dispositif de transport (T1) dans la direction de transport des produits (P ; P1 à Pn) pour recevoir les produits (P ; P1 à Pn) du premier dispositif de transport (T1) et pour transporter davantage les produits (P ; P1 à Pn) à une deuxième vitesse (v2) qui est supérieure à la première vitesse (v1), le produit (P1) respectivement le plus en avant dans le flux de produits (PS) étant accéléré lors du transfert du premier dispositif de transport (T1) au deuxième dispositif de transport (T2) et étant ainsi séparé du flux de produits (PS) en formant un espace (L) dans la direction de transport ;
c) au moins un dispositif d'entraînement (M1, M2) pour orienter le produit séparé (P1) dans la direction de transport sur le deuxième dispositif de transport (T2) avec précision dans le temps et dans l'emplacement, le dispositif d'entraînement (M1, M2) s'engageant sur le produit séparé (P1) et se déplaçant vers l'avant dans la direction de transport à une vitesse (vM1, vM2) qui est dans un rapport avec la deuxième vitesse (v2) de telle sorte que le dispositif d'entraînement (M1, M2) freine le produit séparé (P1) ou continue à le transporter à la deuxième vitesse (v2) ou l'accélère davantage ;
d) un premier dispositif d'entraînement (M1)
d1) pour accumuler les produits (P ; P1 à Pn) sur le premier dispositif de transport (T1), le premier dispositif d'entraînement (M1) s'engageant dans la direction de transport sur le côté avant du produit le plus en avant (P1) dans le flux de produits (PS), et
d2) pour libérer les produits accumulés (P ; P1 à Pn) pour le transfert des produits (P ; P1 à Pn) au deuxième dispositif de transport (T2) en ce que le premier dispositif d'entraînement (M1) se déplace vers l'avant dans la direction de transport à une vitesse (vM1) qui est supérieure à la première vitesse (v1) du premier dispositif de transport (T1) ; et
e) un deuxième dispositif d'entraînement (M2)
e1) pour accumuler les autres produits (P2 à Pn) dans le flux de produits (PS) sur le premier dispositif de transport (T1) après que le produit précédent le plus en avant respectif (P1) du flux de produits (PS) a été séparé du flux de produits (PS) lors du transfert au deuxième dispositif de transport (T2), le deuxième dispositif d'entraînement (M2) s'engageant dans l'espace (L) formé entre le produit séparé précédent (P1) et l'autre flux de produits (PS) et s'engageant dans la direction de transport sur le côté avant du produit suivant le plus en avant (P2) dans le flux de produits (PS), tandis que le produit précédent séparé respectif (P1) est transporté en continu sur le deuxième dispositif de transport (T2), et
e2) pour libérer les autres produits accumulés (P2 à Pn) pour le transfert des produits (P ; P2 à Pn) au deuxième dispositif de transport (T2) en ce que le deuxième dispositif d'entraînement (M2) se déplace vers l'avant dans la direction de transport à une vitesse (vM2) qui est supérieure à la première vitesse (v1) du premier dispositif de transport (T1) ;
f) dans lequel les premier et deuxième dispositifs d'entraînement (M1, M2) sont montés sur des rubans, courroies ou chaînes d'entraînement en circulation qui sont disposées à côté des dispositifs de transport (T1, T2), les premier et deuxième dispositifs d'entraînement (M1, M2) étant entraînables et commandables indépendamment les uns des autres.

10. Dispositif de transport de produits en morceaux (P ; P1 à Pn) sur un ou plusieurs chemins disposés les uns à côté des autres et essentiellement parallèlement les uns aux autres de telle sorte que les produits (P ; P1 à Pn) soient séparés à partir d'un flux de produits (PS) et continuent ensuite d'être transportés de manière uniformément espacée et/ou orientée en groupes (PG), dans lequel il fonctionne en utilisant un procédé selon la revendication 4, dans lequel il présente sur chacun des un ou plusieurs chemins disposés les uns à côté des autres les caractéristiques suivantes :
a) un premier dispositif de transport (T1) pour amener les produits (P ; P1 à Pn) sur chaque chemin en tant que flux de produits continu à une seule rangée (PS) à une première vitesse (v1) ;
b) un deuxième dispositif de transport (T2) disposé derrière le premier dispositif de transport (T1) dans la direction de transport des produits (P ; P1 à Pn) pour recevoir les produits (P ; P1 à Pn) du premier dispositif de transport (T1) et pour transporter davantage les produits (P ; P1 à Pn) à une deuxième vitesse (v2) qui est supérieure à la première vitesse (v1), le produit (P1) respectivement le plus en avant dans le flux de produits (PS) étant accéléré lors du transfert du premier dispositif de transport (T1) au deuxième dispositif de transport (T2) et étant ainsi séparé du flux de produits (PS) en formant un espace (L) dans la direction de transport ;
c) au moins un dispositif d'entraînement (M1, M2) pour orienter le produit séparé (P1) dans la direction de transport sur le deuxième dispositif de transport (T2) avec précision dans le temps et dans l'emplacement, le dispositif d'entraînement (M1, M2) s'engageant sur le produit séparé (P1) et se déplaçant vers l'avant dans la direction de transport à une vitesse (vM1, vM2) qui est dans un rapport avec la deuxième vitesse (v2) de telle sorte que le dispositif d'entraînement (M1, M2) freine le produit séparé (P1) ou continue à le transporter à la deuxième vitesse (v2) ou l'accélère davantage ;
d) un premier dispositif d'entraînement (M1)
d1) pour accumuler les produits (P ; P1 à Pn) sur le premier dispositif de transport (T1), le premier dispositif d'entraînement (M1) s'engageant dans la direction de transport sur le côté avant du produit le plus en avant (P1) dans le flux de produits (PS), et
d2) pour libérer les produits accumulés (P ; P1 à Pn) pour le transfert des produits (P ; P1 à Pn) au deuxième dispositif de transport (T2) en ce que le premier dispositif d'entraînement (M1) se déplace vers l'avant dans la direction de transport à une vitesse (vM1) qui est supérieure à la première vitesse (v1) du premier dispositif de transport (T1) ; et
e) un troisième dispositif d'entraînement (M3)
e1) pour accumuler les autres produits (P2 à Pn) dans le flux de produits (PS) sur le premier dispositif de transport (T1) après que le produit précédent le plus en avant respectif (P1) du flux de produits (PS) a été séparé du flux de produits (PS) lors du transfert au deuxième dispositif de transport (T2), le troisième dispositif d'entraînement (M3) s'engageant ensemble avec un deuxième dispositif d'entraînement (M2) dans l'espace (L) formé entre le produit séparé précédent (P1) et l'autre flux de produits (PS), et le troisième dispositif d'entraînement (M3) s'engageant dans la direction de transport sur le côté avant du produit suivant le plus en avant (P2) dans le flux de produits (PS), tandis que le produit séparé précédent respectif (P1) est transporté en continu sur le deuxième dispositif de transport (T2),
e2) dans lequel le deuxième dispositif d'entraînement (M2) se déplace dans la zone du deuxième dispositif de transport (T2) dans la direction de transport à une vitesse (vM2) qui est égale ou supérieure à la deuxième vitesse (v2) du deuxième dispositif de transport (T2), de sorte que le deuxième dispositif d'entraînement (M2) s'engage dans la direction de transport sur le côté arrière du produit précédent séparé (P1) du flux de produits (PS) et ainsi pousse celui-ci, et
e3) pour libérer les autres produits accumulés (P2 à Pn) pour le transfert des produits (P2 à Pn) au deuxième dispositif de transport (T2) en ce que le troisième dispositif d'entraînement (M3) se déplace vers l'avant dans la direction de transport à une vitesse (vM3) qui est supérieure à la première vitesse (v1) du premier dispositif de transport (T1) ;
f) dans lequel les premier, deuxième et troisième dispositifs d'entraînement (M1, M2, M3) sont montés sur des rubans, courroies ou chaînes d'entraînement en circulation qui sont disposées à côté des dispositifs de transport (T1, T2), les premier, deuxième et troisième dispositifs d'entraînement (M1, M2, M3) étant entraînables et commandables indépendamment les uns des autres.

11. Dispositif selon la revendication 9, **caractérisé en ce qu'**il présente optionnellement en outre un troisième dispositif de transport (T3) disposé dans la direction de transport des produits (P ; P1 à Pn) derrière le deuxième dispositif de transport (T2) pour recevoir et transporter davantage les produits (P ; P1 à Pn) à une troisième vitesse (v3) qui est égale ou supérieure à la deuxième vitesse (v2), et **en ce qu'**il présente optionnellement en outre un troisième dispositif d'entraînement (M3) pour un engagement avec les produits (P ; P1 à Pn) .

12. Dispositif selon la revendication 10, **caractérisé en ce qu'**il présente optionnellement en outre un troisième dispositif de transport (T3) disposé dans la direction de transport des produits (P ; P1 à Pn) derrière le deuxième dispositif de transport (T2) pour recevoir et transporter davantage les produits (P ; P1 à Pn) à une troisième vitesse (v3) qui est égale ou supérieure à la deuxième vitesse (v2).

13. Dispositif selon la revendication 11 ou 12, **caractérisé en ce que** les premier, deuxième et troisième dispositifs de transport (T1, T2, T3) sont des dispositifs de transport à ruban, courroie ou chaîne en circulation.

14. Dispositif selon la revendication 11, **caractérisé en ce que** les troisièmes dispositifs d'entraînement (M3) éventuellement présents sont montés sur des rubans, courroies ou chaînes d'entraînement en circulation qui sont disposées à côté des dispositifs de transport (T1, T2, T3), les troisièmes dispositifs d'entraînement (M3) étant commandables et entraînables indépendamment des premier et/ou deuxième dispositifs d'entraînement (M1, M2).

15. Dispositif selon l'une quelconque des revendications 9, 10 ou 14, **caractérisé en ce que** sur les rubans, courroies ou chaînes d'entraînement des premier et/ou deuxième et/ou troisième dispositifs d'entraînement (M1, M2, M3) sont montés respectivement un ou plusieurs doigts d'entraînement qui sont montés de manière fixe ou pivotante de manière commandée dans la direction de transport des produits (P ; P1 à Pn).

16. Dispositif selon l'une quelconque des revendications 9 à 15, **caractérisé en ce que** les premier et/ou deuxième et/ou troisième dispositifs de transport (T1, T2, T3) présentent des dispositifs à vide qui aspirent les produits (P ; P1 à Pn) et les maintiennent sur les dispositifs de transport (T1, T2, T3).
